# EUROPEAN PATENT APPLICATION

(11) **EP 3 358 809 A1**
(43) Date of publication of application: **08.08.2018**
(21) Application number: 16879203.4
(22) Date of filing: 30.11.2016
(51) Int. Cl.: H04M 1/02, G02F 1/167

(54) **ACCESSORY DEVICE FOR PORTABLE DEVICE**

(30) Priority: 24.12.2015 KR 20150186697
(71) Applicant: Samsung Electronics Co., Ltd., Suwon-si, Gyeonggi-do 16677 (KR)
(72) Inventor: LEE, Seunghwan, Suwon-si Gyeonggi-do 16677 (KR); HONG, Seungsu, Suwon-si Gyeonggi-do 16677 (KR)
(74) Representative: HGF Limited
(86) International application number: PCT/KR2016/013934
(87) International publication number: WO 2017/111336

(57) **Abstract**

An accessory device according to various embodiments comprises: a first housing; a second housing having a first opening and coupled with the first housing; an electrophoretic display unit displaying content through the first opening and having an upper end electrode and a lower end electrode; a printed circuit board on which electronic components including a processor are mounted; and an antenna unit electrically connected with the printed circuit board and receiving data and power from a portable device received by a mounting structure, wherein the lower end electrode and a first surface of the printed circuit board make contact with each other, and an operating voltage for operating the electrophoretic display unit can be supplied through the first surface of the printed circuit board. Various other embodiments are possible.

## Description

### [Technical Field]

The following embodiments relate to an accessory device of a portable device and, more particularly, to an accessory device of a portable device having a display unit.

### [Background Art]

Nowadays, with portable devices such as a smartphone and a tablet personal computer (PC) becoming more widespread, accessories such as various covers, protective film, and a secondary battery have become more widespread.

The cover can protect a portable device from an impact applied from the outside or from penetration of a foreign substance. Further, the cover may include a bumper type cover (hereinafter, referred to as a "bumper") that can protect at least one of a rear surface and a side surface of the portable device and a flip type cover (hereinafter, referred to as a "flip cover") that can protect a rear surface, a side surface, and a front surface of the portable device.

### [Disclosure of Invention]

### [Technical Problem]

In a cover having a display, there is a problem of a complicated process for assembling various components including the display and a problem in which an aesthetic element of an accessory device is reduced with the increase of a physical thickness.

### [Solution to Problem]

In accordance with an aspect of the present invention, an accessory device includes a first housing; a second housing having a first opening and coupled to the first housing; a display unit configured to display a content through the first opening and having an upper end electrode and a lower end electrode; a printed circuit board (PCB) configured to mount electronic components including a processor; and an antenna unit electrically connected to the PCB and configured to receive data and power from a portable device received by a mounting structure, wherein the lower end electrode and a first surface of the PCB come in contact with each other and supply an operating voltage for driving the display unit through the first surface of the PCB.

In accordance with another aspect of the present invention, an accessory device includes a front cover, a rear cover configured to receive a portable device, and a connecting portion configured to connect the front cover and the rear cover, wherein the front cover includes a first housing positioned at an outer surface of the front cover; a display unit positioned under the first housing and configured to display a content and having an upper end electrode and a lower end electrode; a first printed circuit board (PCB) configured to mount some electronic components; and a second housing configured to protect the first PCB, and wherein the rear cover includes a third housing positioned at an internal surface of the rear cover and having a mounting structure configured to receive the portable device; a second PCB connected to the antenna unit and configured to mount some of the electronic components; and a fourth housing configured to protect the second PCB.

In accordance with another aspect of the present invention, an accessory device includes a housing including a first surface facing in a first direction and a second surface facing in a second direction opposite to a first direction; a connection structure configured to detachably attach the housing to an external device including a front surface and a rear surface and that enables the second surface to face the rear surface of the external device; a near field wireless communication circuit disposed within the housing and formed to wirelessly receive power and at least one signal through the rear surface of the external device; a control circuit disposed within the housing and electrically connected to the communication circuit; and at least one display element including a container, a liquid within the container, and a plurality of particles dispersed within the liquid as at least one display element exposed at the first surface of the housing, wherein the control circuit is configured to move at least a portion of the plurality of particles in order to display at least one of a character and an image on the first surface in response to at least one signal from the external device.

According to an embodiment of the present invention, the apparatus may further include an at least partially transparent layer configured to form at least a portion of the first surface.

According to an embodiment of the present invention, the at least partially transparent layer may further include an image or character printed thereon or inserted therein.

According to an embodiment of the present invention, the plurality of particles may have the same color.

### [Advantageous Effects of Invention]

According to various embodiments of the present invention, an accessory device having an electrophoretic display unit electrically connected to a portable device and driven by power wirelessly supplied can be provided.

An accessory device electrically connected to the portable device and that wirelessly receives power from the portable device and that can display data in an electrophoretic display unit can be provided.

An accessory device having an electrophoretic display unit and a double-sided printed circuit board electrically connected to the portable device and that wirelessly receives power from the portable device to be driven can be provided.

According to various embodiments of the present invention, an accessory device having an electrophoretic display unit driven by power wirelessly supplied can be provided.

### [Brief Description of Drawings]

FIG. 1A is a schematic perspective view illustrating a portable device and an accessory device according to an embodiment of the present invention.
FIG. 1B is a schematic perspective view illustrating a portable device and an accessory device according to another embodiment of the present invention.
FIG. 1C is a schematic perspective view illustrating a portable device and an accessory device according to another embodiment of the present invention.
FIGS. 2A and 2B are schematic block diagrams illustrating a portable device and an accessory device according to various embodiments of the present invention.
FIG. 3A is a schematic exploded perspective view illustrating an accessory device according to an embodiment of the present invention.
FIG. 3B is a schematic cross-sectional view illustrating an accessory device according to an embodiment of the present invention.
FIG. 4A is a schematic exploded perspective view illustrating an accessory device according to another embodiment of the present invention.
FIG. 4B is a schematic cross-sectional view illustrating an accessory device according to another embodiment of the present invention.
FIG. 5A is a schematic exploded perspective view illustrating an accessory device according to another embodiment of the present invention.
FIG. 5B is a schematic cross-sectional view illustrating an accessory device according to another embodiment of the present invention.
FIG. 5C is a schematic perspective view illustrating coupling of a portable device and an accessory device according to another embodiment of the present invention.
FIG. 6A is a schematic exploded perspective view illustrating an accessory according to another embodiment of the present invention.
FIG. 6B is a schematic diagram illustrating an example of an accessory device according to another embodiment of the present invention.
FIG. 7 is a schematic flowchart illustrating a screen control method of an accessory device according to an embodiment of the present invention.
FIG. 8A is a schematic exploded perspective view illustrating an accessory according to another embodiment of the present invention.
FIG. 8B is a schematic cross-sectional view illustrating an example of an accessory device according to another embodiment of the present invention.

### [Mode for the Invention]

Hereinafter, embodiments of the present invention will be described in detail with reference to the accompanying drawings. Further, a method of producing and using an accessory device of the present invention will be described in detail with reference to contents described in the accompanying drawings. The same reference numbers or numerals in the drawings denote parts or components that perform substantially the same function.

Terms including an ordinal number such as a "first" and "second" may be used for describing various elements, and the above-described components are not limited by the above terms. The above-described terms may be used for distinguishing one component from another component. For example, in claims of the present invention, a first component may be referred to as a second component. Further, the second component may be referred to as the first component. A term "and/or" includes a combination of a plurality of described elements or any element of a plurality of described elements.

An application according to an embodiment of the present invention means software executed in an Operating System (OS) for a computer or a mobile OS and in which a user uses. For example, the application may include a web browser, mobile payment application, photo album application, word processor, spread sheet, contacts application, calendar application, memo application, alarm application, social network system (SNS) application, game store, chatting application, map application, music player, or video player.

An application according to an embodiment of the present invention may mean software executed in a portable device or an external device connected to the portable device (e.g., server) by a wireless or wired means. Further, the application according to an embodiment of the present invention may mean software executed in a portable device to correspond to a received user input.

A content may be displayed in an executed application. For example, a content may include a video file or an audio file reproduced in a video player, which is one of applications; a music file reproduced in a music player; a photo file displayed in a photo album application; a web page; a file displayed in a web browser; or payment information (such as a mobile card number) transmitted from a mobile payment application.

A content may include video files, audio files, text files, image files, or web pages displayed or executed in an application.

In an embodiment of the present invention, the content may include video files, audio files, text files, image files, or web pages executed to correspond to a received user input.

The content may include a user interface constituting an executed application screen and the application screen. Further, the content may include a content or a plurality of contents.

A widget means a mini-application, which is one of a graphic user interface (GUI) that more smoothly supports an interaction between a user and an application or OS. The widget includes, for example, a weather widget, a calculator widget, and a clock widget.

In an embodiment of the present invention, a "user input" may be used as a term including, for example, button (or key) selection of a user, button (or key) press of the user, button touch of the user, user touch, touch gesture of the user, user voice, presence (e.g., the user appears within a camera recognition range) of the user, or the user motion. Further, the selection of a button (or key) may be used as a term meaning press of a button (or key) or a touch of a button (or key).

In an embodiment of the present invention, a "unit" may be interchangeably used with an apparatus, part, component, element, or circuit. The "unit" may be a minimum unit or a portion of an integrally formed component. The "unit" may be a minimum unit or a portion that performs at least one function.

Terms used in the present application are used for describing an embodiment and do not limit the present invention. Unless the context otherwise clearly indicates, words used in the singular include the plural, and the plural includes the singular. Further, in the present invention, a term "comprise" or "have" indicates presence of a characteristic, numeral, step, operation, element, component, or combination thereof described in a specification and does not exclude presence or addition of at least one other characteristic, numeral, step, operation, element, component, or combination thereof. Like reference numerals in the drawings indicate a member that performs substantially the same function.

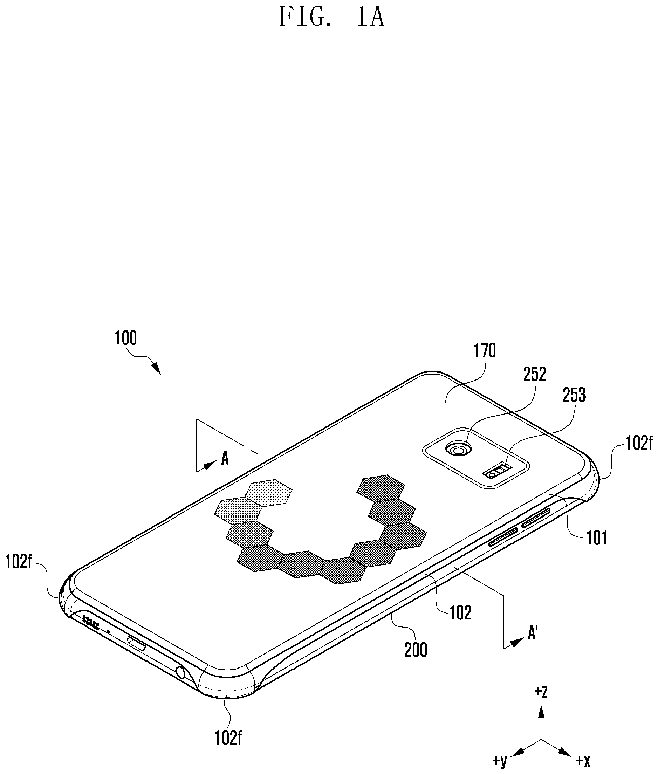

FIG. 1A is a schematic perspective view illustrating a portable device and an accessory device according to an embodiment of the present invention.

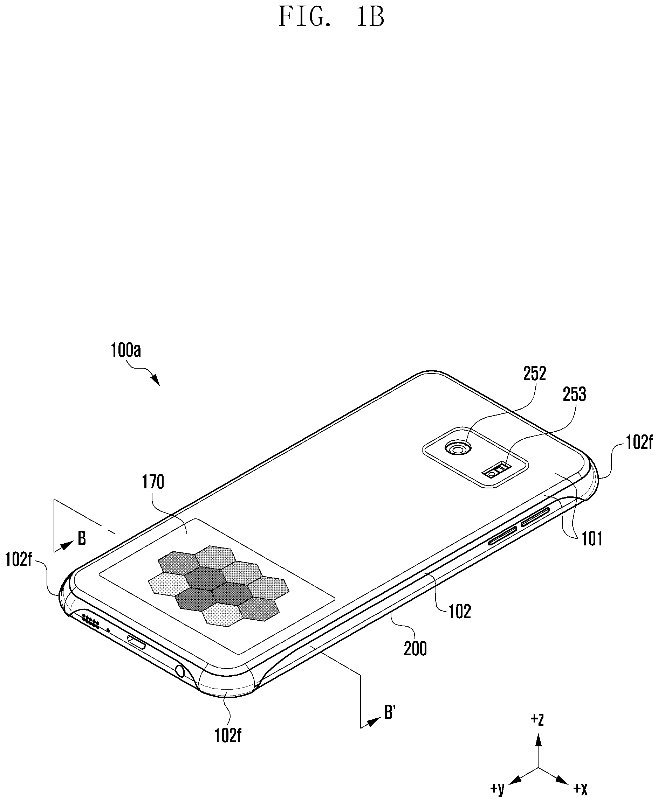

FIG. 1B is a schematic perspective view illustrating a portable device and an accessory device according to another embodiment of the present invention.

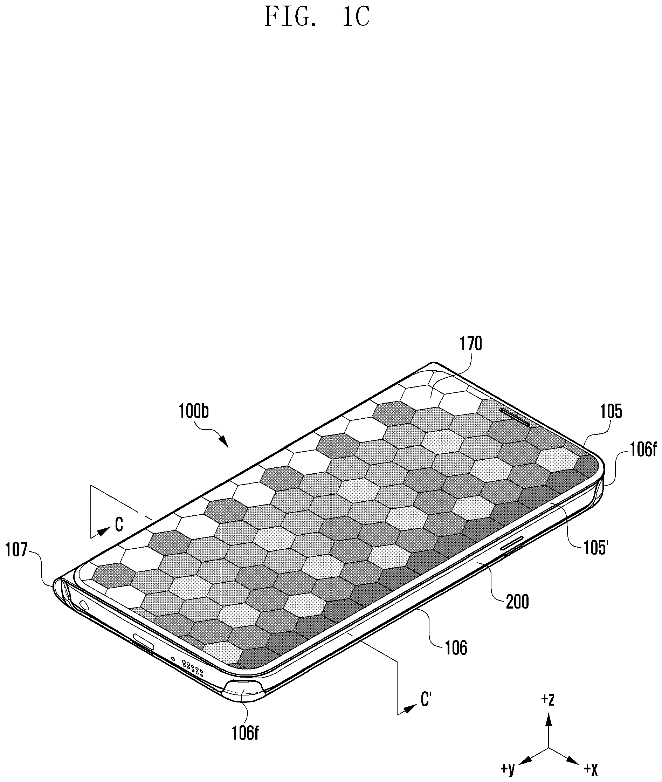

FIG. 1C is a schematic perspective view illustrating a portable device and an accessory device according to another embodiment of the present invention.

With reference to FIGS. 1A to 1C, a portable device 200 may be mounted in accessory devices 100, 100a, and 100b.

According to an embodiment, the accessory devices 100, 100a, and 100b may wirelessly receive power from the portable device 200.

The accessory device 100 may include, for example, bumpers 100 and 100a or a flip cover 100b. The accessory devices 100, 100a, and 100b include an electrophoretic display (hereinafter, referred to as an "EPD unit") 170 having low power consumption.

With reference to FIGS. 1A and 1B, the bumpers 100 and 100a may protect one of a rear surface and a side surface of the portable device 200. The bumpers 100 and 100a may protect a portion of the rear surface or a portion of the side surface of the portable device 200. The bumpers 100 and 100a may protect all of the rear surface and the side surface of the portable device 200. The bumpers 100 and 100a may protect a portion of the rear surface or a portion of the side surface of the portable device 200.

According to an embodiment, the bumpers 100 and 100a may be implemented into a rear surface 101, a front surface (not shown), and a side surface 102. A front surface (not shown) of the bumpers 100 and 100a may be a surface (e.g., z-axis direction) facing the rear surface of the portable device 200. For example, a rear surface of the portable device 200 may be received in the front surface (not shown) of the bumpers 100 and 100a.

The rear surface 101 of the bumpers 100 and 100a may be a surface corresponding to a display direction (e.g., + z axis direction) of the EPD unit 170. The side surface 102 of the bumpers 100 and 100a may support the mounted portable device 200 together with the front surface. The side surface 102 of the bumpers 100 and 100a may support all or a part of the side surface of the portable device 200.

The portable device 200 may be mounted or attached to the bumpers 100 and 100a through a mounting structure 102f positioned at the side surface 102 of the bumpers 100 and 100a. The mounting structure 102f positioned at the side surface 102 of the bumpers 100 and 100a should have a structure that can mount (or attach) the portable device 200. For example, the portable device 200 may be mounted (or attached) in the bumpers 100 and 100a through a contact of the mounting structure 102f and the portable device 200 or a partial contact of the mounting structure 102f and the portable device 200.

The EPD unit 170 may be positioned at the rear surface 101 of the bumpers 100 and 100a. Further, the EPD unit 170 may be positioned between the rear surface 101 and the front surface of the bumpers 100 and 100a. Data (or content) may be displayed in the EPD unit 170. In the rear surface 101 of the bumpers 100 and 100a, an opening for exposing a second camera 252 and a flash 253 of the portable device 200 may be formed.

According to an embodiment, an area of the EPD unit 170 located at the rear surface 101 of the bumpers 100 and 100a may be smaller than that of the rear surface 101 of the bumpers 100 and 100a. For example, an area of the EPD unit 170 may be 98% or less of that of the rear surface 101 of the bumpers 100 and 100a. With reference to FIG. 1A, the area of the EPD unit 170 may be 75% to 98% of that of the rear surface 101 of the bumper 100. Further, with reference to FIG. 1B, the area of the EPD unit 170 may be 10% to 35% of that of the rear surface 101 of the bumper 100a.

An area of an EPD unit (not shown) located at the side surface 102 of the bumpers 100 and 100a may be smaller than that of the side surface 102 of the bumpers 100 and 100a.

With reference to FIG. 1C, a flip cover 100b may protect a front surface, rear surface, and side surface of the portable device 200. The flip cover 100b may protect a portion of a front surface, rear surface, and side surface of the portable device 200. Alternatively, the flip cover 100b may protect a portion of the front surface, a portion of the rear surface, and a portion of the side surface of the portable device 200.

According to an embodiment, the flip cover 100b may include a front cover 105, rear cover 106, and a flexible connecting portion 107 that connects the front cover 105 and the rear cover 106. The portable device 200 may be mounted or attached to a mounting structure 106f located at the rear cover 106 of the flip cover 100b.

The mounting structure 106f located at the rear cover 106 of the flip cover 100b should have a structure that can mount (or attach) the portable device 200. For example, the portable device 200 may be mounted (or attached) in the bumpers 100 and 100a through a contact of the mounting structure 106f and the portable device 200 or a partial contact of the mounting structure 106f and the portable device 200.

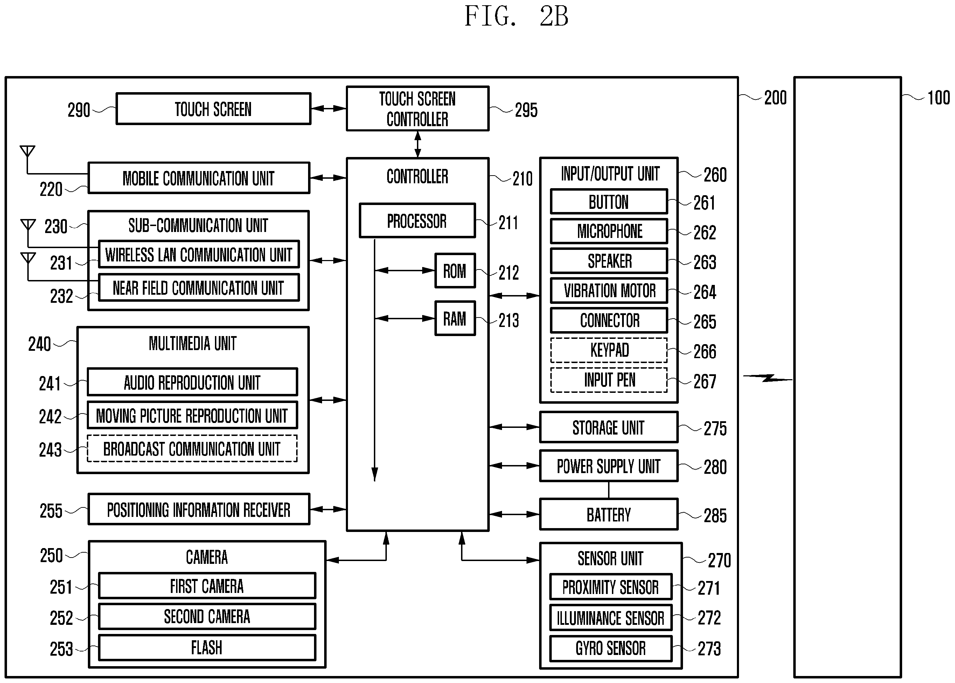

The rear cover 106 of the flip cover 100b may include a rear inner cover surface (not shown) and a rear outer cover surface (not shown). The portable device 200 may be received in the rear inner cover surface (not shown) of the flip cover 100b. Further, the second camera (see 252 of FIG. 2B) and the flash (see 253 of FIG. 2B) may be exposed in the outer cover surface of the flip cover 100b.

The front cover 105 of the flip cover 100b may include a front inner cover surface (not shown) and a front outer cover surface 105'. The front inner cover surface (not shown) of the flip cover 100b may face (e.g., z-axis direction) a touch screen 290 of the portable device 200.

The EPD unit 170 may be positioned in the front outer cover surface 105' of the flip cover 100b. Data (or content) may be displayed in the EPD unit 170. The front outer cover surface 105' of the flip cover 100b may be a surface corresponding to a display direction of the EPD unit 170 (e.g., +z axis direction).

According to an embodiment, an area of the EPD unit 170 may be smaller than that of the front outer cover surface 105' of the flip cover 100b. For example, an area of the EPD unit 170 may be 98% or less of that of the front outer cover surface 105' of the flip cover 100b. With reference to FIG. 1C, an area of the EPD unit 170 may be 75% to 98% of that of the front outer cover surface 105' of the flip cover 100b. The area of the EPD unit 170 may be 35% to 80% of that of the front outer cover surface 105' of the flip cover 100b. Alternatively, the area of the EPD unit 170 may be 5% to 38% of the front outer cover surface 105' of the flip cover **100b.**

According to an embodiment, an EPD unit (not shown) may be located in the connection portion 107 of the flip cover 100b. Data (or content) may be displayed in an EPD unit (not shown) located in the connection portion 107 of the flip cover 100b. Alternatively, an EPD unit (not shown) may be located in the rear outer cover surface of the flip cover 100b. Data (or content) may be displayed in the EPD unit (not shown) located in the rear outer cover surface of the flip cover 100b. The connection portion 107 of the flip cover 100b may be a surface corresponding to a display direction (e.g., -x-axis direction) of the EPD unit (not shown) located in the connection portion 107 of the flip cover 100b.

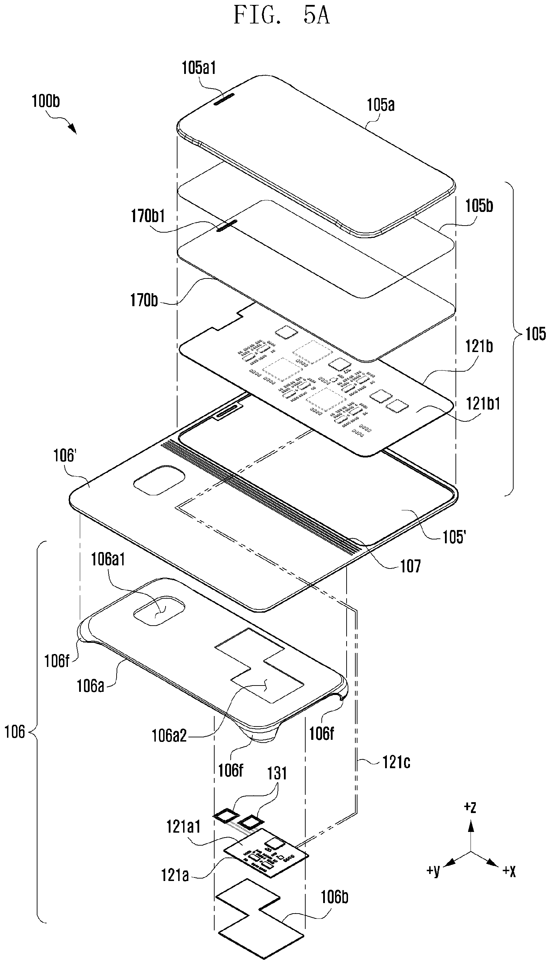

According to an embodiment, the EPD unit 170 may be located in one of the front outer cover surface 105', the connecting portion 107, and a rear outer cover surface (see 106' of FIG. 5A) of the flip cover 100b. Alternatively, a plurality of EPD units (not shown) may be located in a combination of the front outer cover surface 105', connection portion 107, and the rear outer cover surface 106' of the flip cover 100b. For example, an EPD unit (not shown) may be located in each of the front side outer cover 105' and the connecting portion 107. An EPD unit (not shown) may be located in each of the front outer cover surface 105' and the rear outer cover surface 106'. The EPD unit (not shown) may be located in each of the connection portion 107 and the rear side outer cover surface 106'. Alternatively, each EPD unit (not shown) may be located in all of the front outer cover surface 105', connection portion 107, and rear outer cover surface 106' of the flip cover 100b. Data (or content) may be displayed in each EPD unit (not shown).

In an embodiment of the present invention, it may be readily understood to those having ordinary skill in the art that the above-described bumper and flip cover are an example of the accessory device 100 and that the present invention is not limited thereto. The accessory device 100 may have the EPD unit 170 and receive the portable device 200 or may be mounted (or attached) to the portable device 200.

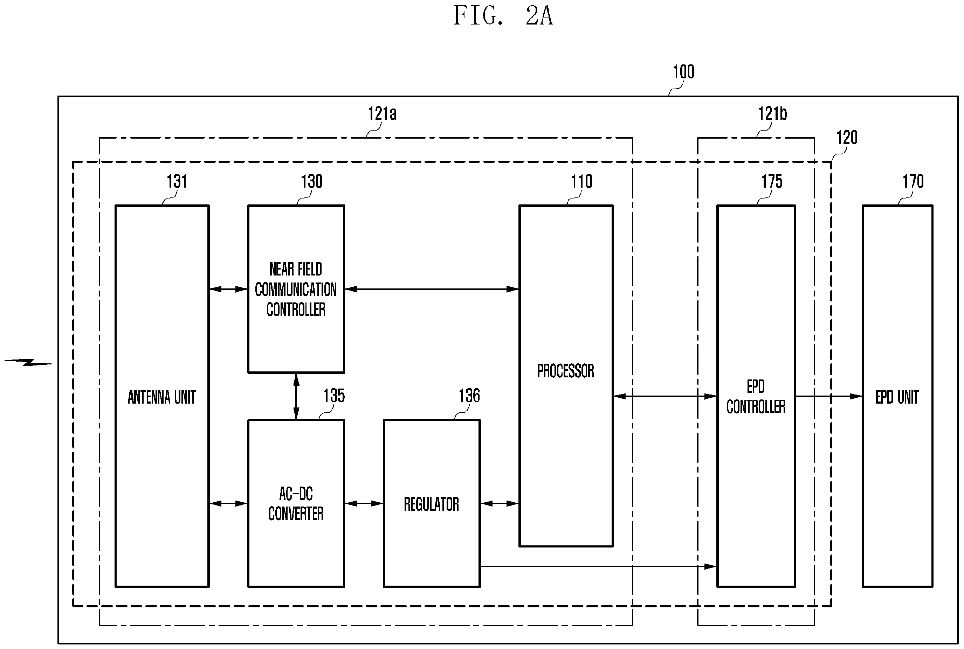

FIGS. 2A and 2B are schematic block diagrams illustrating a portable device and an accessory device according to various embodiments of the present invention.

With reference to FIG. 2A, the accessory device 100 may include a processor 110, near field communication controller 130, antenna unit 131, AC-DC converter 135, regulator 136, EPD unit (or display unit) 170, and EPD controller 175. In an embodiment of the present invention, the near field communication controller 130, the antenna unit 131, the AC-DC converter 135, the regulator 136, the EPD unit (or the display unit) 170, and the EPD controller 175 are referred to as "components" of the accessory device 100. Further, the near field communication controller 130, the antenna unit 131, the AC-DC converter 135, the regulator 136, the EPD unit (or the display unit) 170, and the EPD controller 175 may be referred to as "electronic components" of the accessory device 100.

The accessory device 100 may include one or a plurality of printed circuit boards (PCB). For example, the processor 110, near field communication controller 130, antenna unit 131, AC-DC converter 135, regulator 136, and EPD controller 175 may be mounted in one PCB 120.

A plurality of PCBs 121a and 121b may be a first PCB 121a and a second PCB 121b. Further, a plurality of PCBs may include three or more PCBs.

The first PCB 121a and the second PCB 121b may be electrically connected (e.g., a flexible PCB). Further, the first PCB 121a and the second PCB 121b may be connected through wireless communication (e.g., Bluetooth, WiFi, etc.)

The processor 110, the near field communication controller 130, the antenna unit 131, the AC-DC converter 135, the regulator 136, and the EPD controller 175 may be mounted in a plurality of PCBs 121a and 121b. For example, the controller 110, the near field communication controller 130, the antenna unit 131, the AC-DC converter 135, and the regulator 136 may be mounted in the first PCB 121a. The EPD controller 175 may be mounted in the second PCB 121b,

It may be understood readily to a person having ordinary skill in the art that components mounted in a plurality of PCBs 121a and 121b are an example and the present invention is not limited thereto. For example, one of the components in the first PCB 121a may be positioned at the second PCB 120b. Further, one of the components in the second PCB 121b may be located at the first PCB 121a. Further, one of the components may be positioned at each of the first PCB 121a and the second PCB 121b,

The processor 110 may control at least one of the near field communication controller 130, the antenna unit 131, the DC-AC converter 135, and the regulator 136. Further, the processor 110 may control the EPD unit 170 and the EPD controller 175.

The processor 110 may receive a memory (not shown) or may be connected to a separate memory (not shown) through a bus. The memory (not shown) may store an authentication program and authentication data for authentication of the accessory device 100. Further, the memory (not shown) may further store an encryption code for encryption of authentication data.

For example, the processor 110 may control to receive a wireless signal from the portable device 200 through the near field communication controller 130 and the antenna unit 131.

The processor 110 may perform authentication of the accessory device 100 though the near field communication controller 130 and the antenna unit 131.

The processor 110 may control to receive power from the portable device 200 through the near field communication controller 130 and the antenna unit 131.

In order to display at least one of a text and an image in the EPD unit 170 to correspond to one or a plurality of radio signals received from the portable device 200 using the EPD unit 170 and the EPD controller 175, the processor 110 may control to move at least some of a plurality of particles.

The near field communication controller 130 may receive a radio signal transmitted from the portable device 200 through the antenna unit 131. The near field communication controller 130 may include a near field communication IC (or near field communication chip). For example, the near field communication controller 130 may receive a radio signal of a frequency band (e.g., near field communication (NFC) frequency band or radio frequency identification (RFID) frequency band) following ISO/IEC 14443 standard or ISO/IEC 15693 communication standard through the antenna unit 131.

The near field communication controller 130 may receive a radio signal set to the portable device 200 through the antenna unit 131. For example, the preset wireless signal may be a frequency band corresponding to ISO 14443 standard or ISO/IEC 15693 standard and may be a radio signal that is not defined in the standard ISO 14443 or ISO/IEC 15693 standard. Further, the near field communication controller 130 may receive a request secure (REQS) signal, which is a non-standard protocol signal as a radio signal set to the portable device 200 through the antenna unit 131. The portable device 200 may request authentication to the accessory device 100 through an REQS signal.

When the REQS signal is received from the outside through the near field communication controller 130 and the antenna unit 131, the processor 110 may control to transmit an answer to request secure (ATRS), which is a response to a received REQS signal through the near field communication controller 130 and the antenna unit 131. The ATRS signal may be a frequency band corresponding to the standard ISO 14443 or ISO/IEC 15693 standard and may be a signal set to the portable device 200 as a signal that is not defined to the standard ISO 14443 standard or ISO/IEC 15693 standard. When the ATRS signal is transmitted to the portable device 200, authentication may be performed between the portable device 200 and the accessory device 100.

At least one of the near field communication controller 130 and the processor 110 may include one or a plurality of encryption modules (not shown) for authentication of the accessory device 100. The encryption module (not shown) may include a random number generator (RNG), multimedia unit (MMU), advanced encryption standard (AES), and data encryption standard (T-DES).

The accessory device 100 may include a near field communication controller 130, a processor 110, and a separate crypto processor.

The antenna unit 131 may receive a radio signal from the outside. The antenna unit 131 may wirelessly receive power from the outside. Further, the antenna unit 131 may receive and transmit data. The antenna unit 131 may apply power received from the outside to the AC-DC converter 135.

The antenna unit 131 may include one or a plurality of antennas (not shown). When the number of the antennas is plural, one antenna may transmit or receive a radio signal (or data and content) to and from the portable device 200. Other antennas may wirelessly receive power from the portable device 200.

In the accessory device 100, the near field communication controller 130 and the antenna unit 131 that can receive power and one or a plurality of radio signals from the outside may be referred to as a near field wireless communication circuit. The accessory device 100 may include a control circuit electrically connected to the near field communication circuit. For example, the control circuit may include a processor 110.

The AC-DC converter 135 may convert an alternating current transferred from the antenna unit 131 to a direct current. The AC-DC converter 135 may convert an alternating current transferred from the antenna unit 131 to a direct current by the control of the processor 110. Further, the AC-DC converter 135 may be controlled by a separate wireless power control processor (not shown).

The regulator 136 is connected to the AC-DC converter 135 and may be converted to a driving operation voltage of other components (e.g., processor, EPD controller, etc.) of the accessory device 100. The regulator 136 may output an operating voltage to the processor 110 and the EPD controller 175. Further, the regulator 136 may output an operating voltage to the near field communication controller 130.

The EPD unit 170 may adjust by an electric field a location of particles (not shown) having colors and charges distributed within a fluid (or liquid) within a container by the EPD controller 175 to selectively change a color thereof. Further, a fluid within the container is a solution that uniformly disperses pigment or dye coated with predetermined charges in a dielectric medium, and the EPD unit 170 may implement a desired color by adjusting a color of pigment or dye. A fluid may be transparent or opaque or may have a color. The particles may include at least one of pigments and dyes.

The EPD unit 170 may move particles using a potential difference applied to both electrodes. For example, when +15 V (e.g., Vref) is applied to indium tin oxide (ITO), which is an electrode located at a top portion of the EPD unit 170 and when +30 V is applied to an electrode located at the bottom, the particles may be located at the bottom of the EPD unit 170 corresponding to a lower end electrode by a potential difference of +15 V. Further, when 0 V is applied to the electrode located at the bottom, particles may be moved in a direction of an upper end electrode by a potential difference of -15 V.

A movement distance of particles within the EPD unit 170 may be adjusted according to at least one of applied time and the applied number of times in which a voltage is applied to both electrodes by the EPD controller 175. Brightness of the EPD unit 170 may be adjusted according to adjustment of a moving distance of the particles. For example, in a state in which +15 V is applied to the upper end electrode, when 0 V is several times (e.g., 5 times, which is the reference number of times) applied to the lower end electrode at predetermined intervals, particles may move in an upper end electrode direction to reflect much light entered from the outside. Further, when 0 V is applied to the lower end **electrode** with the number of times (e.g., three times when the reference number is 5) smaller than the reference number of times at a predetermined interval, particles moved into an intermediate region between both electrodes may partially reflect only a portion of light entered from the outside.

The EPD unit 170 may include an EDP unit (not shown) that has a fluid of a different color and that has an independently driven portion. The fluid having a color may have a plurality of colors.

When each portion of the EPD unit (not shown) is interconnected, an accessory device having a plurality of colors may be implemented (e.g., display the same color with a background color of a plurality of colors). A form of the partial EPD unit (not shown) may be a repeating pattern of a particular shape (e.g., shape) and may be implemented into various picture types. The particles may have the same color as or a color different from a fluid having a color.

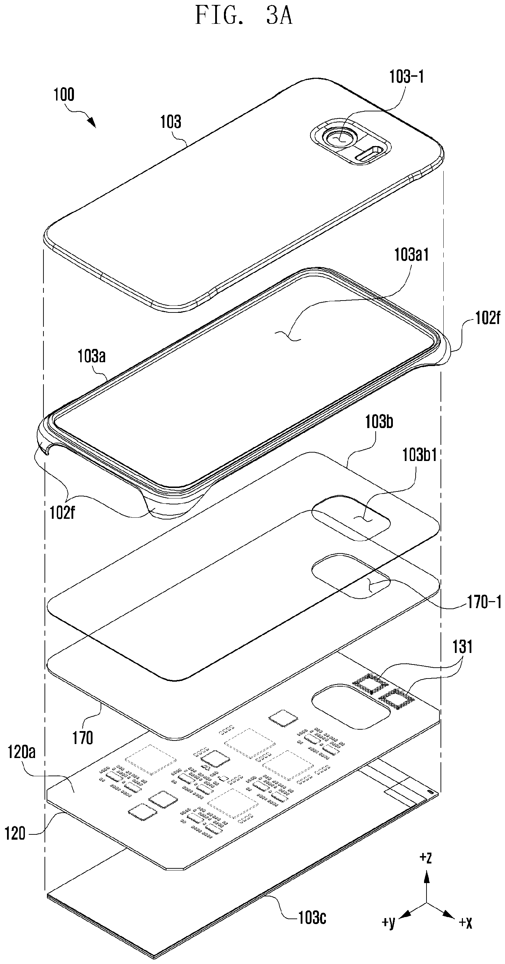

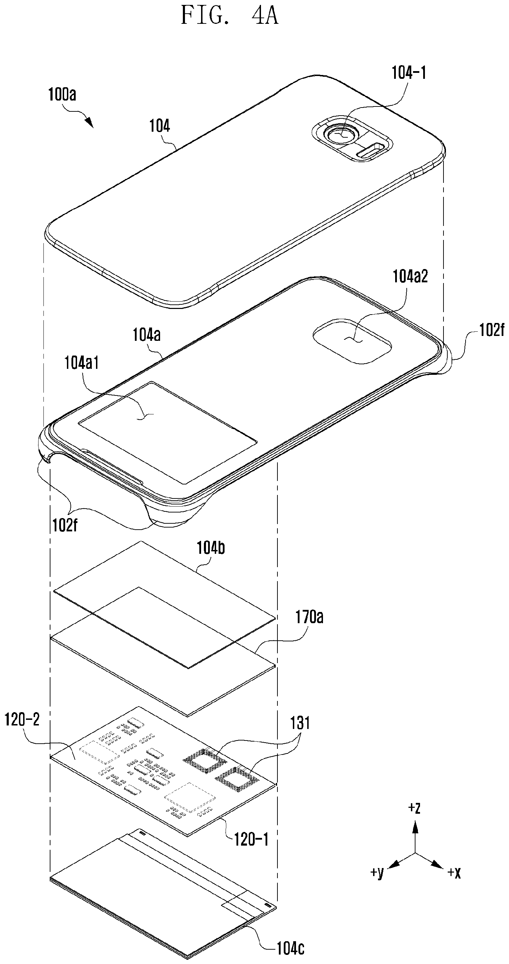

A shape of the EPD unit 170 may be a polygon including a circle, an ellipse, and a rectangle or a polygon having a round corner. With reference to FIG. 1B, a shape of the EPD unit 170 is a rectangle. An exposed shape of the EPD unit 170 may be determined by an opening (e.g., 103a1 of FIG. 3A or 104a1 of FIG. 4A) of the second housing. Further, a shape of the opening (e.g., 103a1 of FIG. 3A or 104a1 of FIG. 4A) may be a circle or an ellipse, and a shape of the EPD unit 170 may be a polygon.

The EPD controller 175 may output data processed by the processor 110 to the EPD unit 170. The EPD controller 175 may control the EPD unit 170 to output data processed by the processor 110. Further, the EPD unit 170 may display data received in the EPD controller 175. The EPD unit 170 may display a text, a symbol, a pattern, or an image under the control of the EPD controller 175.

Components of the above-described accessory device 100 are an example and the present invention is not limited thereto. Further, it may be readily understood to those having ordinary skill in the art that components of the accessory device 100 may be added (e.g., addition of a battery, addition of a receiving coil for wireless charging), changed (e.g., the EPD unit is changed to e-ink), or deleted (e.g., removal of the near field communication controller) according to a function and structure of the accessory device 100.

With reference to FIGS. 1A to 1C and FIG. 2B, the portable device 200 may be connected to another device (e.g., accessory device, wearable device, or server) by a wired or wireless means using a mobile communication unit 220, a sub-communication unit 230, and a connector 265. The portable device 200 may include a device that can mount or attach the accessory device **100** as well as a mobile phone (not shown), smart phone, tablet device (not shown), MP3 players (not shown), and video player (not shown). The portable device 200 may be referred to as an external device.

The portable device 200 includes a touch screen 290 and may transmit data (e.g., corresponding to a content) to the outside or may receive data from the outside through the communication unit 220 or 230. The portable device 200 may have an input pen 267 and a touch screen 290 and transmit data (e.g., corresponding to a content) to the outside or receive data (e.g., corresponding to the content) from the outside through the communication unit 220 or 230. Further, the portable device 200 may transmit data (e.g., corresponding to the content) to the outside or receive data (e.g., corresponding to the content) from the outside with a display unit (e.g., having only a display panel without a touch panel) through the communication unit 220 or 230.

The portable device 200 may include a controller 210, mobile communication unit 220, sub-communication unit 230, multimedia unit 240, camera 250, positioning information receiver 255, input/output unit 260, sensor unit 270, storage unit 275, and power supply 280. Further, the portable device 200 may include a touch screen 290 and a touch screen controller 295.

The controller 210 may include a processor 211. Further, the controller 210 may further include a read-only memory (ROM) 212 in which a control program for the control of the portable device 200 is stored and a random-access memory (RAM) 213 that stores a signal or data input from the outside of the portable device 200 or that is used as storage of various operations performed in the portable device 200.

The controller 210 performs a function of controlling an overall operation of the portable device 200 and a signal flow between internal components 220 to 295 of the portable device 200 and processing data. The controller 210 controls power supply to the internal components 220 to 295 using the power supply 280.

The processor 211 may include a graphic processing unit (GPU, not shown) for graphic processing. Further, the processor 211 may include a sensor processor (not shown) that controls a sensor or a communication processor (not shown) that controls communication.

The processor 211 may be implemented into a system on chip (SoC) form including a core (not shown) and a GPU (not shown). The processor 211 may include a single-core, dual-core, triple-core, quad-core, and multiple cores. Further, the processor 211, ROM 212, and RAM 213 may be interconnected by a bus.

The controller 210 may control the mobile communication unit 220, sub-communication unit 230, multimedia unit 240, camera 250, positioning information receiver 255, input/output unit 260, sensor unit 270, storage unit 275, power supply 280, touch screen 290, and touch screen controller 295.

The controller 210 may control to supply power supplied to the accessory device **100** through a contact point connected to the power supply 280 and a battery 285.

The controller 210 may control to supply power to the accessory device 100 and to provide at least one of visual feedback, auditory feedback, and haptic feedback corresponding to at least one piece of data (or a content) displayed to the user in the EPD unit 170 of the accessory device 100.

In various embodiments of the present invention, a "controller of the portable device" may include a processor 211, ROM 212, and RAM 213.

The mobile communication unit 220 may be connected to other devices (e.g., another portable device, wearable device, or server) through a mobile communication network using at least one antenna by the control of the controller 210. The mobile communication unit 220 may include an antenna unit (not shown). The antenna unit (not shown) may include one or a plurality of antennas.

The sub-communication unit 230 may be connected to the other devices (e.g., another portable device, wearable device, or server) through a wireless LAN communication unit 231 and/or a near field communication unit 232 under the control of the controller 210. The sub-communication unit 230 may include an antenna unit (not shown). The antenna unit (not shown) may include one or a plurality of antennas.

The wireless LAN communication unit 231 may be wirelessly connected to the AP at a location in which an access point (AP) is installed under the control of the controller 210. The wireless LAN communication unit 231 may include, for example, Wi-Fi.

Near field communication supported in the near field communication unit 232 may include Bluetooth communication, Bluetooth low energy communication, infrared data association (IrDA), ultra-wideband (UWB) communication, magnetic security transmission (MST) communication, and/or near field communication (NFC).

The near field communication unit 232 may be connected to the accessory device 100 found through near field communication. The near field communication unit 232 may supply power to the accessory device 100 wirelessly connected by the control of the controller 210 through the antenna unit (not shown).

The controller 210 may transmit or receive data to and from the accessory device 100 through near field communication. The controller 210 may perform authentication of the accessory device 100 in which power is supplied through near field communication.

The portable device 200 may include one of a mobile communication unit 220, wireless LAN communication unit 231, and near field communication unit 232 or a combination of a mobile communication unit 220, wireless LAN communication unit 231, and near field communication unit 232 according to a function and/or a performance.

A term "communication unit" in the various embodiments of the present invention includes a mobile communication unit 220 and/or a sub-communication unit 230.

The multimedia unit 240 may receive an external broadcast or reproduce audio and/or video under the control of the controller 210.

An audio reproduction unit 241 may reproduce an audio source (e.g., audio file) previously stored at the storage unit 275 of the portable device 200 or received from the outside using an audio codec under the control of the controller 210.

According to various embodiments of the present invention, the audio reproducing unit 241 may supply power to the accessory device 100 and reproduce auditory feedback corresponding to at least one piece of data (or a content) display in the EPD unit 170 of the accessory device 100. For example, the audio reproduction unit **241** may supply power to the accessory device 100 and reproduce auditory feedback (e.g., output of an audio source stored at the storage unit 275) corresponding to at least one piece of data (or content) display in the EPD unit 170 of the accessory device 100 to the accessory device 100 through the audio codec by the control of the controller 210.

A moving picture reproduction unit 242 may reproduce a digital moving picture source (e.g., a video file) previously stored at the storage unit 275 of the portable device 200 or received from the outside using a video codec by the control of the controller 210.

According to various embodiments of the present invention, the moving picture reproduction unit 242 may supply power to the accessory device 100 and reproduce visual feedback corresponding to at least one piece of data (or content) display in the EPD unit 170 of the accessory device 100. For example, visual feedback (e.g., output of a video source stored in the storage unit 275) may be reproduced through the video codec under the control of the controller 210.

A broadcast communication unit 243 may receive a broadcast signal (e.g., TV broadcast signal, radio broadcast signal, or data broadcasting signal) and broadcast additional information (e.g., electronic program guide (EPG) or electronic service guide (ESG)) transmitted from an external broadcast station through an antenna (not shown) under the control of the controller 210.

The multimedia unit 240 may exclude the broadcast communication unit 243 to correspond to a performance or structure of the portable device 200 that includes an audio reproduction unit 241 and a moving picture reproduction unit 242. Further, the controller 210 may include an audio reproduction unit 241 or a moving picture reproduction unit 242 of the multimedia unit 240.

The camera 250 may photograph a still picture or a moving picture under the control of the controller 210. The camera 250 may include one or both of a first camera 251 and a second camera 252.

At least one of the first camera 251 and the second camera 252 may include a secondary light source (e.g., flash 253) for providing a light quantity required for photographing.

The camera 250 may further include a first camera 251 and an additional camera (e.g., a third camera (not shown)) adjacent (e.g., a gap between the first camera 251 and the additional camera is 5 mm to 80 mm) to the first camera 251 at a front surface or may include a form in which the first camera 251 and the third camera (not shown) are implemented into one unit.

The controller 210 may control to photograph a three-dimensional still picture or a three-dimensional moving picture using the first camera 251 and a third camera (not shown) of the front surface.

The camera 250 may further include a second camera 252 and an additional camera (e.g., a fourth camera (not shown)) adjacent (e.g., a gap between the second camera 252 and the additional camera is 5 mm to 80 mm) to the second camera 252 at a rear surface or may include a form in which the second camera 252 and the fourth camera (not shown) are implemented into one unit.

The controller 210 may control to photograph a three-dimensional still picture or a three-dimensional moving picture using the second camera 251 and the fourth camera (not shown) of the rear side.

The cameras 251 and 252 may perform wide angle, telephoto, and close-up photographing using an additional lens (not shown) that can be detached to a separate adapter (not shown).

The positioning information receiver 255 periodically receives a signal (e.g., orbit information of a GPS satellite and time information and navigation messages of the satellite) from a plurality of satellites (not shown) on the Earth's orbit.

The portable device 200 may calculate a position between each satellite (not shown) and the portable device 200 using the signals received from the plurality of satellites (not shown) and calculate a distance using a transmission/reception time difference. Through triangulation, a location, time, or moving speed of the portable device 200 may be calculated. An additional satellite may be required for orbit correction or time correction.

In a case of being indoors, the portable device 200 may detect a position or moving speed of the portable device 200 using a wireless AP (not shown). Position detection of the portable device 200 at indoors may be performed using a cell-ID method, enhanced cell-ID method, or angle of arrival (AoA) method. Further, the portable device 200 may detect a position or a moving speed of the portable device 200 located indoors using a wireless beacon (not shown).

The input/output unit 260 may include at least one of at least one button 261, at least one microphone 262, at least one speaker 263, at least one vibration motor 264, connector 265, keypad 266, and input pen 267.

With reference to FIGS. 1 and 2B, the button 261 may include a home button 261a, recently executed App button 261b, and/or backward button 261c in a front lower portion of the portable device 200. The button 261 may include at least one volume button (not shown) and a power/lock button 261e at the side surface of the portable device 200. Further, the button 261 of the portable device 200 may include only the home button 261a, the volume button (not shown), and the power/lock button 261e. The button 261 may be implemented into a touch button as well as a physical button. Further, the button 261 of the portable device 200 may be displayed in a form of a text, an image, or an icon on the touch screen 290.

The controller 210 may receive electrical signals transmitted from the button 261 to correspond to a user input. The controller 210 may detect a user input using a received signal (e.g., press of the button 261 or contact of the button 261).

It will be readily understood by those skilled in the art that a form, position, function, or name of the button 261 shown in FIGS. 1 and 2B is an example for description and the present invention is not limited thereto and that the button 261 may be changed or modified.

A microphone 262 receives an input of a voice or a sound from the outside to generate an electrical signal under the control of the controller 210. An electrical signal generated in the microphone 262 may be converted in an audio codec to be stored in the storage unit 275 or be output through a speaker 263 under the control of the controller 210.

With reference to FIGS. 1 and 2B, at least one microphone 262 may be located at the front surface, side surface, and/or rear surface of the portable device 200. Further, at least one microphone 262 may be positioned only at the side surface of the portable device 200.

The speaker 263 may output a sound corresponding to various signals (e.g., radio signal, broadcast signal, audio source, video file, or picture-taking) decoded by an audio codec under the control of the controller 210.

With reference to FIGS. 1 and 2A, one or a plurality of speakers 263 may be located at a front surface, side surface, and/or rear surface of the portable device 200. Further, a plurality of speakers (not shown) may be located at the side surface of the portable device 200.

According to an embodiment of the present invention, the speaker 263 may supply power to the accessory device 100 and output auditory feedback corresponding to at least one piece of data (or a content) display in the EPD unit 170 of the accessory device 100. For example, the speaker 263 may supply power to the accessory device 100 and output auditory feedback corresponding to at least one item of data (or a content) displayed in the EPD unit 170 of the accessory device 100 by the control of the controller 210.

A vibration motor 264 may convert an electrical signal to a mechanical vibration under the control of the controller 210. The vibration motor 264 may include a linear vibration motor, bar type vibration motor, coin type vibration motor, or piezoelectric element vibration motor.

At least one vibration motor 264 may be located at the portable device 200. Further, the vibration motor 264 may vibrate the entire portable device 200 or may locally vibrate only a portion of the portable device 200.

According to an embodiment of the present invention, the vibration motor 264 may supply power to the accessory device 100 and may output haptic feedback corresponding to at least one piece of data (or the content) display in the EPD unit 170 of the accessory device 100. Further, the vibration motor 264 may provide various haptic feedback (e.g., vibration intensity and vibration duration) previously stored or received from the outside based on a control command of the controller 210.

The connector 265 may be used as an interface for connecting the portable device 200 and the external device (not shown) or a power source (not shown). The connector 265 may include a micro USB type connector or a USB-C type connector.

The portable device 200 may transmit data (e.g., that corresponding to the content) stored at the storage unit 275 through a wired cable connected to the connector 265 to the outside under the control of the controller 210 or may receive data (e.g., corresponding to the content) from the outside. The portable device 200 may receive power from a power source (not shown) through a wire cable connected to the connector 265 or may charge the battery (not shown) under the control of the controller 210. Furthermore, the portable device 200 may be connected to the accessory device (e.g., a flip cover, a speaker) through the connector 265.

In order to control the portable device 200, a keypad 266 may receive a key input from the user. The keypad 266 may include one of a virtual keypad (not shown) displayed within the touch screen 290 and a physical keypad (not shown) formed at the front surface of the portable device 200. Further, the keypad 266 may include a separate keypad (not shown) that can be connected by a wireless (e.g., using near field communication) or wired means.

The input pen 267 may be injected into/removed from the portable device 200 by the user and may touch (or select) or handwrite or draw (paint or sketch) an object (e.g., menu, text, image, video, graphic, icon, and shortcut icon) and/or a content (e.g., text files, image files, audio files, video files, or web pages) displayed (or formed) on a screen (e.g., memo screen, notepad screen, calendar screen) displayed in a writing/drawing application or the touch screen 290 of the portable device 200.

The sensor unit 270 may detect a status of the portable device 200 and/or a peripheral state of the sensor unit 270. The sensor unit 270 may include one or a plurality of sensors.

The sensor unit 270 may include a proximity sensor 271 for detecting whether a user approaches the portable device 200, illuminance sensor 272 for detecting an amount of light of a periphery of the portable device 200, ambient light sensor, and/or gyro sensor 273 for detecting a direction using a rotational inertia of the electronic device 200. The sensor unit 270 may include an acceleration sensor (not shown), a gravity sensor, or an altimeter. Further, the sensor unit 270 may further include a heart rate sensor (not shown) or a fingerprint sensor (not shown).

At least one sensor included in the sensor unit 270 detects a state of the portable device 200 and generates an electrical signal corresponding to the detection to transmit the electrical signal to the controller 210. It may be understood readily to a person having ordinary skill in the art that a sensor included in the sensor unit 270 may be added, changed, or deleted according to a performance of the portable device 200.

The storage unit 275 may store a signal or data input/output to correspond to an operation of the mobile communication unit 220, sub-communication unit 230, multimedia unit 240, camera 250, positioning information receiver 255, input/output unit 260, sensor unit 270, and touch screen 290 by the control of the controller 210. The storage unit 275 may store a control program for the control of the controller 210 or the portable device 200 and a graphical user interface (GUI) provided by a manufacturer or related to an application downloaded from the outside, images for providing the GUI, user information, documents, databases, or related data.

The storage unit 275 may supply power to the accessory device 100 and store visual feedback (e.g., video source) that can be recognized by a user and output on the touch screen 290 corresponding to at least one piece of data (or a content) display in the EPD unit 170 of the accessory device, auditory feedback (e.g., sound source) that can be recognized by a user and output from the speaker 263, and haptic feedback (e.g., haptic pattern) that can be recognized by a user and output from the vibration motor 264.

The storage unit 275 may store a feedback providing time (e.g., 500 ms) of feedback provided to the user.

In an embodiment of the present invention, a term "storage unit" includes a storage unit 275, ROM **212,** and RAM **213** within the controller 210, or memory card (e.g., a micro SD card, a memory stick, not shown) mounted in the portable device 200. The storage unit 275 may include a nonvolatile memory, a volatile memory, a hard disk drive (HDD), or solid state drives (SSD).

The power supply 280 may supply power to the components (210 to 295) of the portable device 200 under the control of the controller 210. The power supply 280 may supply power input from an external power supply (not shown) to each of the elements of the portable device 200 through a wire cable (not shown) connected to the connector 265 under the control of the controller 210.

The power supply 280 may charge one or more batteries 285 under the control of the controller 210.

The power supply 280 may supply power of the battery 285 to the accessory device **100** by wire through a contact point (not shown). Further, the power supply 280 may wirelessly charge the accessory device **100** or a wearable device (not shown) using a separate transmitting coil (not shown) connected to the battery 285 by the control of the controller 210. A wireless charging method may include, for example, a magnetic resonance method, an electromagnetic wave method, or a magnetic induction method.

The touch screen 290 may provide a graphical user interface (GUI) corresponding to various services (e.g., voice call, video call, data transmission, broadcasting reception, photography, video view, or application execution) to the user. The touch screen 290 includes a touch panel (not shown) that receives a touch input and a display panel (not shown) for screen display. Further, the touch screen 290 may include an edge touch panel (not shown) that receives a touch input and an edge display panel (not shown) for screen display.

The touch screen 290 may transmit an analog signal corresponding to a single-touch or multi-touch input through the home screen 191 or the GUI to the touch screen controller 295. The touch screen 290 may receive an input of a single-touch or a multi-touch through a user body (finger including a thumb) or the input pen 267.

The touch screen controller 295 converts an analog signal corresponding to a single-touch or a multi-touch received from the touch screen 290 to a digital signal and transmits the digital signal to the controller 210. The controller 210 may calculate an X coordinate and a Y coordinate corresponding to a touch position of a touch input to the touch screen 290 using the digital signal received from the touch screen controller 295.

The controller 210 may control the touch screen 290 using the digital signal received from the touch screen controller 295. For example, the controller 210 may control to display to distinguish a shortcut icon displayed on the touch screen 290 from other shortcut icons to correspond to the input touch or may execute an application (e.g., phone) corresponding to the selected shortcut icon to display an application screen on the touch screen 290.

The portable device 200 shown in FIGS. 1A to 1C and 2B includes a touch screen, but it may have a plurality of touch screens. Each of the touch screens may be located in each housing (not shown), and each housing (not shown) may be connected to each other by one or a plurality of hinges (not shown).

At the front surface of one housing (not shown), a plurality of touch screen disposed in an up/down or left/right manner may be positioned. A plurality of touch screens may be implemented into a display panel and a plurality of touch panels. A plurality of touch screens may be implemented into a touch panel corresponding to the plurality of display panels. Further, a plurality of touch screens may be implemented into a plurality of touch panels corresponding to the plurality of display panels.

It will be readily apparent to those skilled in the art that at least one component (e.g., component of dashed lines) of the portable device 200 shown in FIGS. 1A to 1C and FIG. 2B may be added, deleted, or changed to correspond to a performance of the portable device 200.

FIG. 3A is a schematic exploded perspective view illustrating an accessory device according to an embodiment of the present invention.

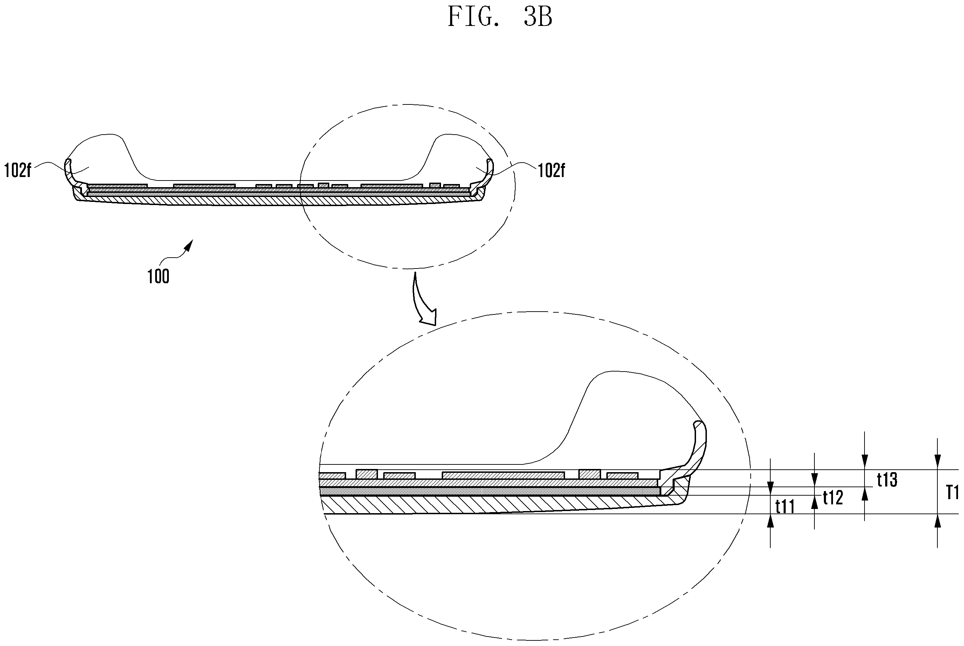

FIG. 3B is a schematic cross-sectional view illustrating an accessory device according to an embodiment of the present invention. FIG. 3B is a cross-sectional view illustrating the accessory device taken along a line A-A' of FIG. 1A.

With reference to FIG. 3A, an area of the EPD unit 170 may be 98% or less of a surface area of a first housing 103. An area of the EPD unit 170 may be 75% to 99.9% of that of the first housing 103.

An accessory device (e.g., bumper) 100 may include a first housing 103, second housing 103a, film 103b, EPD unit 170, PCB 120, and third housing 103c. The accessory device 100 may have the above-described components changed or removed or may have a separate component added.

The first housing 103 corresponds to a rear surface of the accessory device 100. The first housing 103 may be transparent, opaque, or partially transparent (or opaque). Further, the first housing 103 may be implemented in one-piece or may be divided into multiple pieces.

A material of the first housing 103 may be polycarbonate, tempered glass, or acrylic. Further, a material of the first housing 103 may be thermoplastic plastic.

The first housing 103 may be formed by injection molding. The first housing 103 may be double injection molded. For example, in double injection molding, an area corresponding to the EPD unit 170 is made of a transparent material, and an area that does not correspond to the EPD unit 170 is made of a non-transparent material and may be formed by injection molding. The above-described injection molding is an example and a molding method for implementation of the first housing 103 as well as injection molding is not limited.

The first housing 103 may have an opening 103-1. At least one of the second camera 252 and the flash 253 of the portable device 200 may be exposed to the outside through the opening 103-1.

The second housing 103a is positioned between the first housing 103 and the portable device 200. The second housing 103a1 may receive the portable device 200 through a mounting structure 102f.

The second housing 103a may be transparent, opaque, or partially transparent (or opaque). Further, the second housing 103a may be implemented in one-piece or may be divided into multiple pieces.

A material of the second housing 103a may include a metal, wood, or plastic material as well as polycarbonate.

The second housing 103a may be formed by injection molding. The second housing 103a may have an opening 103a. One of the EPD unit 170, the second camera 252, and the flash 253 may be exposed to the outside through the opening 103a1.

The second housing 103a may be coupled to the first housing 103. For example, the first housing 103 and the second housing 103a may be coupled by bonding, adhering, or fit. In an embodiment of the present invention, the second housing 103a and the first housing 103 may be implemented into one-piece. A shape of the second housing 103a and the first housing 103 implemented in one-piece may be similar to a coupled shape of the second housing 103a and the first housing 103.

The film 103b may be positioned at the front surface (e.g., +z axis direction) of the EPD unit 170. The film 103b may be made of an optical transparent material or may be an optical sheet. For example, the film 103b may have a polyethylene terephthalate (PET) material.

The film 103b may have a thickness smaller than that of the EPD unit 170. For example, a thickness of the film 103b may be 10% to 75% of that of the EPD unit 170. The film 103b may be formed in one-piece (e.g., having no opening 103b1) or may have an opening 103b1.

A silicon sheet (not shown) may be located between the first housing 103 and the film 103b. The silicone sheet (not shown) may have excellent transmittance and reduce surface reflection. The silicone sheet (not shown) may be supported by one of the second housing 103a and the first housing 103.

The EPD unit 170 may be located between the film 103b and the PCB 120. The EPD unit 170 may have an opening 170-1. One of the second camera 252 and the flash 253 of the portable device 200 may be exposed to the outside through the opening 170-1.

The EPD unit 170 may receive power and data from the PCB 120. An area of the EPD unit 170 may be changed to correspond to a size and structure of the second housing 103a.

The EPD unit 170 may be electrically connected to the PCB 120.

The PCB 120 may be a double-sided PCB. Further, the PCB 120 may be a flexible double-sided PCB. Components of the accessory device 100 may be mounted in a front surface (e.g., z-axis direction) of the PCB 120, and a lower electrode of the EPD unit 170 may be connected to a rear surface 120a of the PCB 120.

The PCB 120 may be electrically connected to the antenna unit 131. The antenna unit 131 may include one or a plurality of antennas. Through the antenna unit 131, power or a radio signal (or data) may be received from the outside.

When an area of the PCB 120 is smaller than that of the EPD unit 170, a portion of the rear surface (e.g., a component is not mounted) 120a of the PCB 120 may be connected to a lower end electrode of the EPD unit 170. Further, a portion of the rear surface 120a of the PCB 120 may be implemented into a lower end electrode of the EPD unit 170.

An area of the PCB 120 may be similar to that of the EPD unit 170. For example, an area of the PCB 120 may be 90% to 99% of that of the EPD unit 170. Further, an area of the PCB 120 may be 75% to 100% of that of the EPD unit 170.

According to an embodiment, when an area of the PCB 120 is similar to that of the EPD unit 170, the rear surface 120a of the PCB 120 and a lower end electrode of the EPD unit 170 may be coupled. Through the rear surface 120a of the PCB 120, a voltage may be directly applied to the lower end electrode of the EPD unit 170.

Components of the accessory device 100 may be mounted in the front surface (not shown) of the PCB 120. The third housing 103c may be located under (e.g., z-axis direction) the front surface (not shown) of the PCB 120.

The third housing 103c is a cover element and may prevent the front surface of the PCB 120 from being exposed to the outside. An area of the third housing 103c may be an area not to expose the front surface (not shown) of the PCB 120 to the outside. For example, an area of the third housing 103c may be substantially similar (e.g., the difference of +10% or less) to the front surface (not shown) of the PCB 120. Further, an area of the third housing 103c may be substantially similar (e.g., a difference of +10% or less) to an area of the EPD unit 170.

Exposure prevention to the outside of the front surface of the PCB 120 may be implemented by a separate sheet (not shown) as well as the third housing 103c. For example, the front surface of the PCB 120 may be covered by the third housing 103c and may be covered once more by a separate sheet (not shown).

A sealing (not shown) that prevents penetration of foreign materials may be located between the rear surface 120a of the PCB 120 and the film 103b.

With reference to FIG. 3B, a thickness T1 of the accessory device 100, except for the mounting structure 102f, may be smaller than that of the portable device 200. A thickness T1 of the accessory device 100, except for the mounting structure 102f, may be 1.75 mm to 2.7 mm. A thickness T1 of the accessory device 100, except for the mounting structure 102f may be 2.35 mm to 2.85 mm. Further, a thickness T1 of the accessory device 100, except for the mounting structure 102f may be 1.60 mm to 2.5 mm.

According to an embodiment, a thickness t11 of the first housing 103 may be 1.3 mm. A thickness t11 of the first housing 103 may be 710 *µ*m to 1.1 mm. Further, a thickness t11 of the first housing 103 may be 990 *µ*m to 1.4mm.

According to an embodiment, a thickness t12 of the EPD unit 170 may be 200 *µ*m. Further, a thickness t12 of the EPD unit 170 may be 100 *µ*m to 300 *µ*m.

According to an embodiment, a thickness t13 of the PCB 120 in which components of the accessory device 100 are mounted may be 1.1 mm. A maximum thickness of the component may be 800 *µ*m. Further, a maximum thickness of the component may be 600 *µ*m to 850 *µ*m. A thickness of the PCB 120 may be a 300 *µ*m. A thickness of the PCB 120 may be 150 *µ*m to 350 *µ*m.

According to an embodiment, although not shown in FIG. 3B, each thickness of the film 103b, a silicon sheet (not shown), and the third housing 103c may be 50 *µ*m to 300 *µ*m.

A thickness T1 of the accessory device 100, except for the above-described mounting structure 102f, is an example and the present invention is not limited thereto. In an embodiment of the present invention, a thickness of the accessory device 100 implemented into a double-sided PCB may be smaller than that of an accessory device implemented into a general PCB in which the EPD unit 170 and the component are mounted and connected to the EPD unit 170 and the FPCB. For example, a thickness of the accessory device 100 implemented into a double-sided PCB may be 70 to 80% of that of an accessory device implemented into a general PCB in which the EPD unit 170 and the component are mounted and connected to the EPD unit 170 and the FPCB.

FIG. 4A is a schematic exploded perspective view illustrating an accessory device according to an embodiment of the present invention.

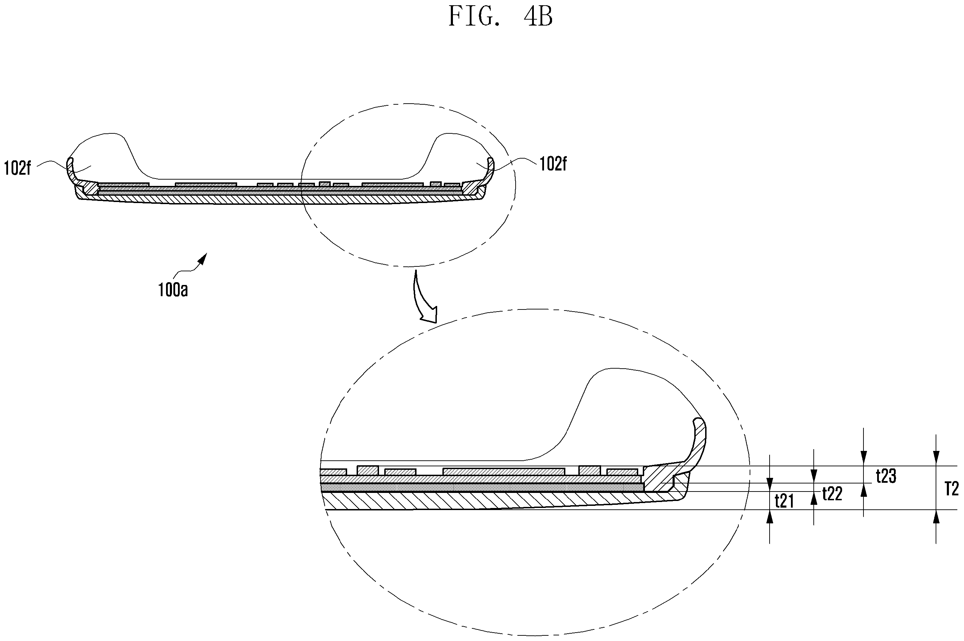

FIG. 4B is a schematic cross-sectional view illustrating an accessory device according to another embodiment of the present invention. FIG. 4B is a cross-sectional view cutting the accessory device along line B-B' of FIG. 1B.

With reference to FIG. 4A, an area of the EPD unit 170 may be 50% or less of a surface area of a first housing 104. An area of the EPD unit 170 may be 10% to 51% of the surface area of the first housing 104.

An accessory device (e.g., bumper) 100a may include a first housing 104, second housing 104a, film 104b, EPD unit 170a smaller than the EPD unit 170 of FIG. 3A, PCB 120-1, and third housing 104c. The accessory device 100a may have the above-described components changed or removed or may have a separate component added.

According to an embodiment, the first housing 104 corresponds to a rear surface of the accessory device 100a. The first housing 104 may be transparent, opaque, or partially transparent (or opaque). Further, the first housing 104 may be implemented in one-piece or may be divided into multiple pieces.

A material of the first housing 104 may be polycarbonate, glass, or acrylic. Further, a material of the first housing 104 may be thermoplastic plastic.

The first housing 104 may be injection molded. The first housing **104** may be formed by double injection molding. For example, in double injection molding, an area corresponding to the EPD unit 170a is a transparent material and an area that does not correspond to the EPD unit 170a is a non-transparent material and may be formed by injection molding. The above-mentioned injection molding is an example and is not limited to a molding method for implementation of the first housing 104 as well as injection molding.

The first housing 104 may have an opening 104-1. At least one of the second camera 252 and the flash 253 of the portable device 200 may be exposed to the outside through the opening 104-1.

According to an embodiment, the second housing 104a is positioned between the first housing 104 and the portable device 200. The second housing 104a may receive the portable device 200 through the mounting structure 102f.

The second housing 104a may be transparent, opaque, or partially transparent (or opaque). Further, the second housing 104a may be implemented in one-piece or may be divided into multiple pieces. A material of the second housing 104a may include a metal, wood, or plastic material, as well as polycarbonate.

The second housing 104a may be injection molded. The second housing 104a may have a plurality of openings. For example, the second housing 104a may have a first opening 104a1 corresponding to the EPD unit 170a and a second opening 104a2 corresponding to the second camera 252 and the flash 253. Through the first opening 104a1, the EPD unit 170a may be exposed. The EPD unit 170a exposed through the first opening 104a1 may not be exposed to the outside by the first housing 104. Further, at least one of the second camera 252 and the flash 253 may be exposed to the outside through the second opening 104a2.

The second housing 104a may be coupled to the first housing 104. For example, the first housing 104 and the second housing 104a may be coupled by bonding, adhering, or fit. In an embodiment of the present invention, the second housing 104a and the first housing 104 may be implemented into one-piece. A shape of the second housing 104a and the first housing 104 implemented in one-piece may be similar to a coupling shape of the second housing 104a and the first housing 104.

At a front surface (e.g., +z axis direction) of the EPD unit 170a, a film 104b may be loaded. The film 104b may be made of a transparent material and may be an optical sheet. For example, the film 104b may have a polyethylene terephthalate (PET) material.

The film 104b may have a thickness smaller than that of the EPD unit 170a. For example, a thickness of the film 104b may be 10% to 75% of that of the EPD unit 170a. The film 104b may be formed in one piece without an opening.

A silicon sheet (not shown) may be located between the first housing 104 and the film 104b. The silicone sheet (not shown) may have excellent transmittance and reduce surface reflection. The silicone sheet (not shown) may be supported by one of the second housing 104a and the first housing 104.

According to an embodiment, the EPD unit 170a may be located between the film 104b and a PCB 120-1. The EPD unit 170a may receive power and data from the PCB 120-1. An area of the EPD unit 170a may be changed to correspond to a size and structure of the second housing 104a. The EPD unit 170a may be electrically connected to the PCB 120-1.

According to an embodiment, the PCB 120-1 may be a double-sided PCB. Further, the PCB 120-1 may be a flexible double-sided PCB. The components of the accessory device 100 may be mounted at a front surface of the PCB 120-1, and a lower electrode of the EPD unit 170a may be connected to the rear surface 120-2 of the PCB 120-1.

The PCB 120-1 may be electrically connected to the antenna unit 131. The antenna unit 131 may include one or a plurality of antennas. Through the antenna unit 131, power and a wireless signal (or data) may be received from the outside.

According to an embodiment, when an area of the PCB 120-1 is similar to that of the EPD unit 170a, a rear surface (e.g., a component is not mounted) 120-2 of the PCB 120-1 may be connected to a lower end electrode of the EPD unit 170a. Further, the rear surface 120-2 of the PCB 120-1 may be implemented into a lower end electrode of the EPD unit 170a.

A component (not shown) of the accessory device 100 may be mounted in a front surface of the PCB 120-1. A third housing 104c may be positioned under (e.g., z-axis direction) the front surface (not shown) of the PCB 120.

According to an embodiment, the third housing 104c is a cover member and may prevent external exposure of the front surface of the PCB 120-1. An area of the third housing 104c may be an area not to expose the front surface (not shown) of the PCB 120-1 to the outside. For example, an area of the third housing 104c may be substantially similar (e.g., a difference of +10% or less) to the front surface (not shown) of the PCB 120-1. Further, an area of the third housing 104c may be substantially similar (e.g., a difference of +10% or less) to that of the EPD unit 170a.

According to an embodiment, external exposure prevention of the front surface (not shown) of the PCB 120-1 may be implemented by a separate sheet (not shown) as well as the third housing 104c. For example, the front surface (not shown) of the PCB 120-1 may be covered by the third housing 104c and may be covered once more by a separate sheet (not shown).

A sealing (not shown) that prevents penetration of foreign materials may be positioned between the rear surface 120-2 and the film 104b of the PCB 120-1.

According to various embodiments of the present invention, with reference to FIG. 4B, a thickness T2 of the accessory device 100a, except for the mounting structure 102f, may be smaller than that of the portable device 200. The thickness T2 of the accessory device 100a, except for the mounting structure 102f may be substantially similar (e.g., a difference of the accessory device) to or the same as a thickness T1 of the accessory device 100a, except for the mounting structure 102f of FIG. 3B.

In an embodiment, a thickness t21 of the first housing 104 may be 1.3 mm. A thickness t21 of the first housing 104 may be substantially similar (e.g., a difference of the accessory device) to a thickness t11 of the first housing 103 in FIG. 3B.

According to an embodiment, a thickness t22 of the EPD unit 170a may be 200 *µ*m. A thickness t22 of the small EPD unit 170a may be substantially similar (e.g., the difference of the accessory device) to a thickness t12 of the EPD unit 170 in FIG. 3B.

According to an embodiment, a thickness t23 of the PCB 120-1 in which the component of the accessory device 100a is mounted may be 1.1 mm. The thickness t23 of the PCB 120-1 in which the component of the accessory device 100a is mounted may be substantially similar (e.g., the difference of the accessory device) to a thickness t13 of the PCB 120 in which the component of the accessory device 100 is mounted.

According to an embodiment, although not shown in FIG. 4B, a thickness of each of the film 104b, the silicon sheet (not shown), and the third housing 104c may be 50 *µ*m to 300 *µ*m.

A thickness T2 of the accessory device 100a, except for the above-described mounting structure 102f, is an example and the present invention is not limited thereto. In an embodiment of the present invention, a thickness T2 of the accessory device 100a implemented into a double-sided PCB may be substantially similar (e.g., the difference of the accessory device) to a thickness T1 of the accessory device 100, except for the mounted structure 102f in FIG. 3B.

FIG. 5A is a schematic exploded perspective view illustrating an accessory device according to another embodiment of the present invention.

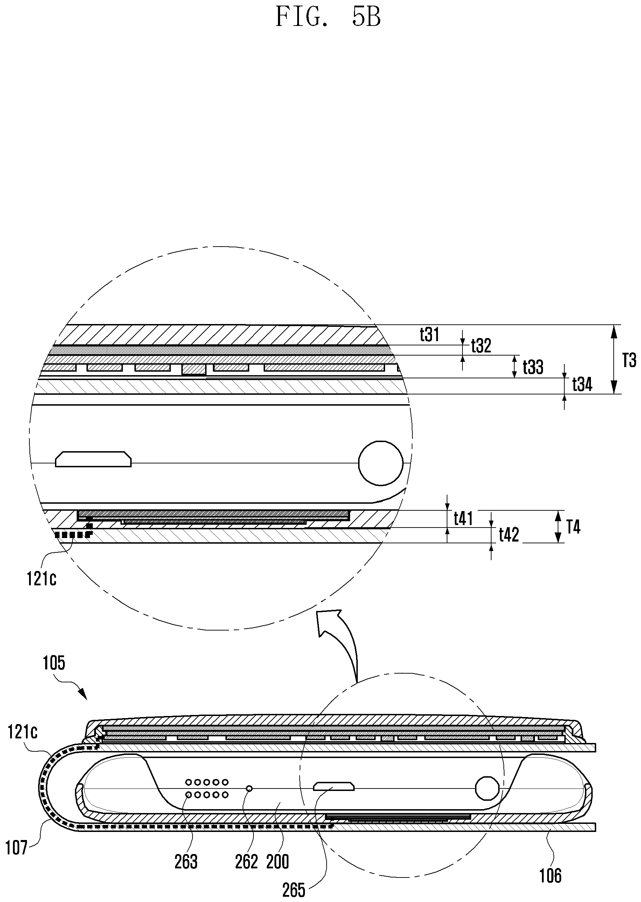

FIG. 5B is a schematic cross-sectional view illustrating an accessory device according to another embodiment of the present invention. FIG. 5B is a cross-sectional view illustrating an accessory device taken along line C-C' of FIG. 1C.

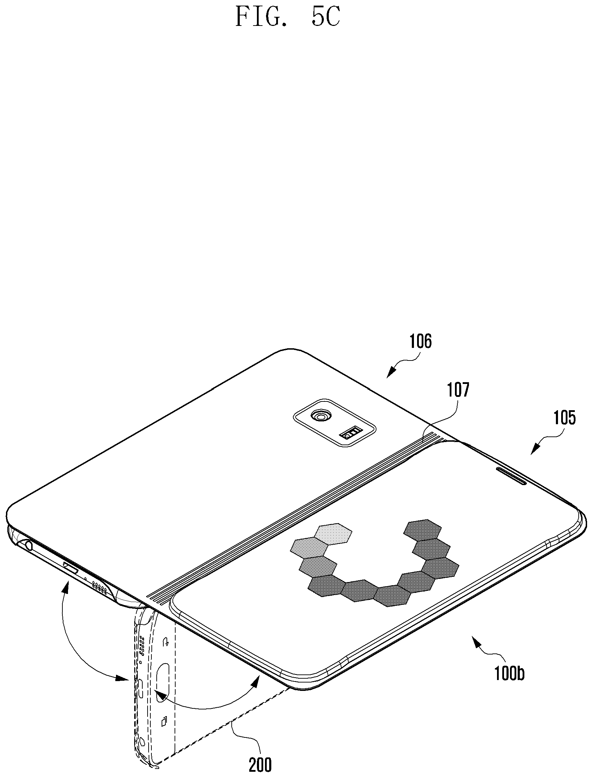

FIG. 5C is a schematic perspective view illustrating coupling of a portable device and an accessory device according to another embodiment of the present invention.

With reference to FIGS. 5A to 5C, the accessory device may be a flip cover 100b. The portable device 200 may be received in the rear cover 106 of the flip cover 100b. A front cover 105 of the flip cover 100b may rotate about the rear cover 106 so as to cover the front surface of the portable device 200.

With reference to FIG. 5C, the portable device 200 received in the rear cover 106 of the flip cover 100b may rotate by 0° to 360° based on the front cover 105. Further, the front cover 105 of the flip cover 100b may rotate by 0° to 360° based on the rear cover 106 of the flip cover 100b.

According to an embodiment, an area of an EPD unit 170b may be 98% or less of a surface area of a first housing 105a. An area of the EPD unit 170b may be 75% to 99.9% of a surface area of the first housing 105a.

The flip cover 100b may include a front cover 105, rear cover 106, and a flexible connecting portion 107 that connects the front cover 105 and the rear cover 106.

According to an embodiment, the front cover 105 may include a first housing 105a, film 105b, EPD unit 170b, second PCB 121b, and second housing 105c.

The rear cover 106 may include a third housing 106a, first PCB 121a, and fourth housing 106b.

The first housing 105a may correspond to a front surface of the accessory device 100b. The first housing 105a may be transparent, opaque, or partially transparent (or opaque). Further, the first housing 105a may be implemented in one-piece or may be divided into multiple pieces.

A material of the first housing 105a may be polycarbonate, tempered glass, or acrylic. Further, a material of the first housing 105a may be thermoplastic plastic.

According to an embodiment, the first housing 105a may be injection molded. Further, the first housing 105a may be formed by double injection molding. For example, in double injection molding, an area corresponding to the EPD unit 170b is a transparent material, and an area that does not correspond to the EPD unit 170b is a non-transparent material and may be formed by injection molding. The above-mentioned injection molding is an example and is not limited to a molding method for implementation of the first housing 105a as well as injection molding.

The first housing 105a may have an opening 105 a1. Through the opening 105 a1, the speaker 263 of the portable device 200 may be exposed to the outside.

The film 105b may be located between the first housing 105a and the EPD unit 170b. The film 105b may be made of a transparent material or may be an optical sheet. For example, the film 105b may have a polyethylene terephthalate (PET) material.

A silicon sheet (not shown) may be positioned between the first housing 105a and the film 105b. The silicone sheet (not shown) may have excellent transmittance and reduce surface reflection. The silicone sheet (not shown) may be supported by the first housing 105a.

According to an embodiment, the EPD unit 170b may be positioned between the film 105b and the second PCB 121b. The EPD unit 170b may have an opening 170b1. Through the opening 170b1, the speaker 263 of the portable device 200 may be exposed to the outside. The EPD unit 170b may receive power and data from the second PCB 121b. An area of the EPD unit 170b may be changed to correspond to a size and structure of the front cover 105.

The EPD unit 170b may be electrically connected to the second PCB 121b.

According to an embodiment, the second PCB 121b may be a double-sided PCB. Further, the second PCB 121b may be a flexible double-sided PCB. Some of the components of the accessory device 100 may be mounted in a front surface of the second PCB 121b, and the lower electrode of the EPD unit 170b may be connected to the rear surface 121b1 of the second PCB 121b.

When an area of the second PCB 121b is smaller than that of the EPD unit 170b, the rear surface (e.g., 121bl) of the second PCB 121b may be connected to a lower end electrode of the EPD unit 170b. Further, the rear surface 121b1 of the second PCB 121b may be implemented into a lower end electrode of the EPD unit 170b.

An area of the second PCB 121b may be similar to that of the EPD unit 170b. For example, an area of the second PCB 121b may be 90% to 99% of that of the EPD unit 170b. Further, an area of the second PCB 121b may be 75% to 100% of that of the EPD unit 170b.

When an area of the second PCB 121b is similar to that of the EPD unit 170b, the rear surface 121b1 of the second PCB 121b and the lower end electrode of the EPD unit 170b may be coupled. A voltage may be directly applied to the lower end electrode of the EPD unit 170b through the rear surface 121b1 of the second PCB 121b.

According to an embodiment, a portion (e.g., EPD controller) of the components of the accessory device 100 may be mounted in a front surface (not shown) of the second PCB 121b. A second housing 105c may be located under (e.g., z-axis direction) a front surface (not shown) of the second PCB 121b.

According to an embodiment, the second housing 105c is a cover member and may prevent the front surface of the second PCB 121b from being exposed to the outside. An area of the second housing 105c may be an area not to expose the front surface (not shown) of the second PCB 121b to the outside.

External exposure prevention of the front surface of the second PCB 121b may be implemented by a separate sheet (not shown) as well as the second housing 105c. For example, the front surface of the second PCB 121b may be covered by the second housing 105c and may be covered once more by a separate sheet (not shown).

A sealing (not shown) that prevents penetration of foreign materials may be located between the film 105b and the rear surface 121b1 of the second PCB 121b.

According to an embodiment, the rear cover 106 may include a third housing 106a, a first PCB 121a, and a fourth housing 106b.

The third housing 106a may receive the portable device 200 through the mounting structure 106f. The third housing 106a may be transparent, opaque, or partially transparent (or opaque). Further, the third housing 106a may be implemented in one-piece or may be divided into multiple pieces.

A material of the third housing 106a may include a metal, wood, or plastic material as well as polycarbonate.

The third housing 106a may be injection molded. The third housing 106a may have one or a plurality of openings. One of the second camera 252 and the flash 253 may be exposed to the outside through the first opening 106a1. Alternatively, the first PCB 121a may be located at a position in which the second opening 106a2 is formed.

The third housing 106a may be coupled to a rear internal cover surface (not shown). For example, the rear internal cover surface (not shown) and the third housing 106a may be coupled by bonding, adhering, or fit.

According to an embodiment, the first PCB 121a may be a one surface PCB. Further, the first PCB 121a may be a flexible one surface PCB. A portion of the components of the accessory device 100 may be mounted in a front surface 121a1 of the first PCB 121a.

The first PCB 121a may be electrically connected to the antenna unit 131. The antenna unit 131 may include one or a plurality of antennas. Through the antenna unit 131, power and a wireless signal (or data) may be received from the outside.

The first PCB 121a may be connected to the second PCB 121b through an FPCB 121c. Power and processed data may be delivered from the first PCB 121a to the second PCB 121b through the FPCB 121c.

The fourth housing 106b may be located under (e.g., z-axis direction) a rear surface (not shown) of the first PCB 121a.

The fourth housing 106b may prevent a rear surface of the first PCB 121a from being exposed to the outside by the cover member. An area of the fourth housing 106b may be an area not to expose the rear surface of the first PCB 121a to the outside. For example, an area of the fourth housing 106b may be substantially similar (e.g., a difference of +10% or less) to the rear surface of the first PCB 121a.

Prevention exposure to the outside of the rear surface of the first PCB 121a may be implemented by a separate sheet (not shown) as well as the fourth housing 106b. For example, a rear surface of the first PCB 121a may be covered by the fourth housing 106b and be covered once more by a separate sheet (not shown).

In an embodiment of the present invention, the first PCB and the second PCB are an embodiment and the present invention is not limited thereto. For example, when a PCB located at the front cover 105 may be referred to as a first PCB, a PCB located at the rear cover 106 may be referred to as a second PCB.

According to various embodiments of the present invention, with reference to FIG. 5B, a thickness T3 of the front cover 105 in the accessory device 100b may be smaller than that of the portable device 200. The thickness T3 of the front cover 105 may be 2.8 mm to 3.6 mm. The thickness T3 of the front cover 105 may be 3.1 mm to 4.16 mm. Further, the thickness T3 of the front cover 105 may be 2.4 mm to 3.2 mm.

According to an embodiment, a thickness t31 of the first housing 105a may be 1.3 mm. The thickness t31 of the first housing 105a may be 710 *µ*m to 1.1 mm. Further, the thickness t31 of the first housing 105a may be 990 *µ*m to 1.4 mm.

According to an embodiment, a thickness t32 of the EPD unit 170b may be 200 *µ*m. Further, the thickness t32 of the EPD unit 170b may be 100 *µ*m to 300 *µ*m*.*

According to an embodiment, a thickness t33 of the second PCB 121b in which a portion of constituent elements is mounted may be 1.0 mm. A maximum thickness of some of the components may be 700 *µ*m. Further, a maximum thickness of some of the components may be 600 *µ*m to 850 *µ*m.

According to an embodiment, a thickness of the second PCB 121b may be 300 *µ*m. Further, a thickness of the second PCB 121b may be 150 *µ*m to 350 *µ*m.

According to an embodiment, a thickness t34 of the front cover 105 may be 1.0 mm. A thickness t34 of the front cover 105 may be 810 *µ*m to 1.2 mm.

According to an embodiment, a thickness of each of the film 105b, a silicon sheet (not shown), and the third housing 105c may be 50 *µ*m to 300 *µ*m.

According to an embodiment, a thickness T4 of the rear cover 106, except for the mounting structure 106f, may be 2.1 mm to 2.4 mm. A thickness T4 of the rear cover 106 may be 1.56 mm to 3.2 mm.

According to an embodiment, in the rear cover 106, except for the mounting structure 106f, a thickness t41 of the first PCB 121a in which some of the components are mounted may be 1.1 mm. A maximum thickness of some of the components may be 800 *µ*m. Further, a maximum thickness of some of the components may be 600 *µ*m to 850 *µ*m.

According to an embodiment, a thickness of the first PCB 121a may be 300 *µ*m. Further, a thickness of the first PCB 121a may be 150 *µ*m to 350 *µ*m.

According to an embodiment, a thickness t42 of the rear cover 106 may be 1.0 mm. A thickness t42 of the rear cover 106 may be 810 *µ*m to 1.2 mm.

It will be easily understood to those having ordinary skill in the art that a thickness (T3+T4) of the accessory device 100b, except for the above-described mounting structure 106f, is an example and the present invention is not limited thereto.

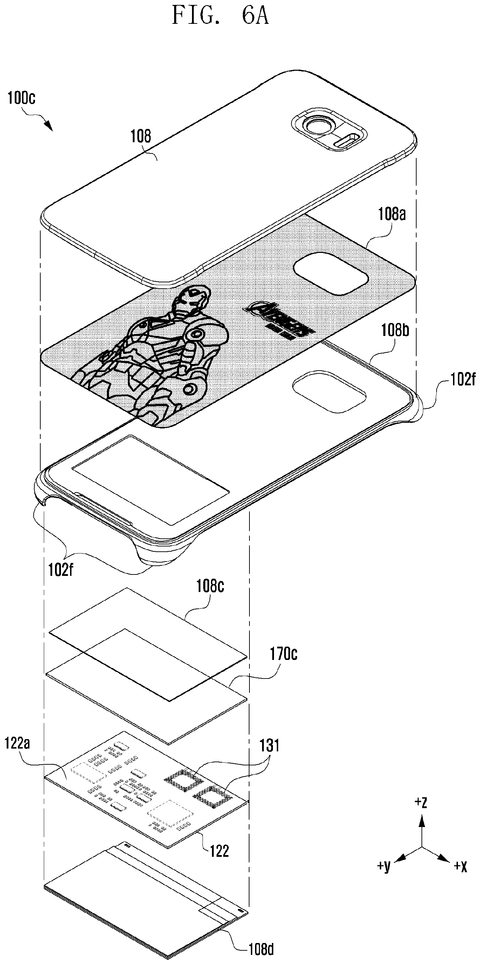

FIG. 6A is a schematic exploded perspective view illustrating an accessory according to another embodiment of the present invention.

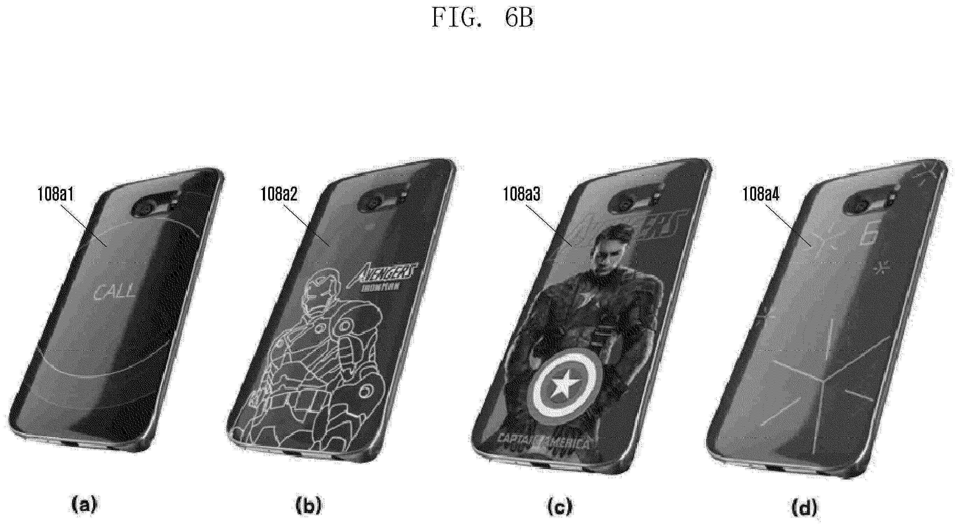

FIG. 6B is a schematic diagram of an example illustrating an accessory device according to another embodiment of the present invention.

With reference to FIGS. 6A and 6B, an accessory device 100c may be substantially similar to (e.g., whether a graphic film exists) or the same as the accessory device 100a of FIG. 4A.

According to an embodiment, the accessory device 100c may include a first housing 108, first film 108a, second housing 108b, second film 108c, EPD unit 170c, PCB 122, and third housing 108d. In the accessory device 100c, the above-described components may be changed or deleted or a separate component may be further added to the accessory device 100c.

The first housing 108 may be similar to or the same as the first housing 104 of FIG. 4A. The second housing 108b may be similar to or the same as the second housing 104a of FIG. 4A. The second film 108c may be similar to or the same as the film 104b of FIG. 4A. The EPD unit 170c may be similar to or the same as the EPD unit 170a of FIG. 4A. The PCB 122 may be similar to or the same as the PCB 120-1 of FIG. 4A. Further, the third housing 108d may be similar to or the same as the third housing 104c of FIG. 4A.

With reference to FIG. 6B, a visual shape 108a1 may be printed on the first film 108a of FIG. 6A. For example, a visual shape such as a text, shape, symbol, or image of black and white may be printed on the first film 108a. A visual shape such as a text, shape, symbol, or image of black and white may be printed on one surface of the first film 108a. Alternatively, a visual shape such as a text, shape, symbol, or image of a color may be printed on the first film 108a. A visual shape such as a text, shape, symbol, or image of a color may be printed on one surface of the first film 108a.

The accessory device 100c may be distinguished from the above-described accessory devices 100, 100a, and 100b by visual shapes 108a1 to 108a4 printed on the first film 108a.

Data displayed in the EPD unit 170c may be distinguished from visual shapes 108a1 to 108a4 printed on the first film 108a.

An area of the EPD unit 170c of FIG. 6A may be an example and be the same area as that of the EPD unit 170 of FIG. 3A. Further, an area of the EPD unit 170c of FIG. 6A may be different according to visual shapes 108a1 to 108a4 printed on the first film 108a.

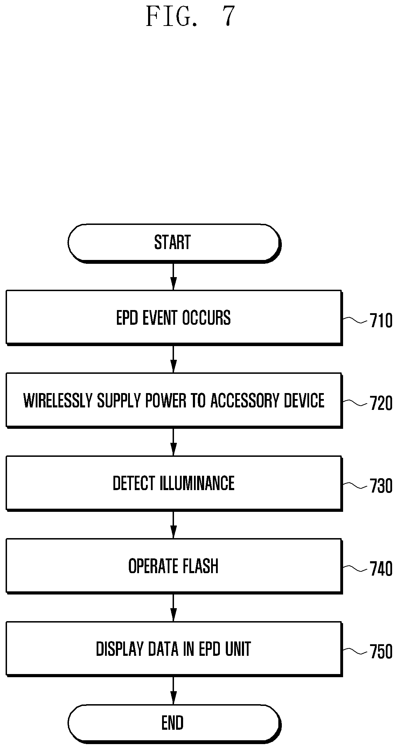

FIG. 7 is a schematic flowchart illustrating a screen control method of the accessory device according to an embodiment of the present invention.

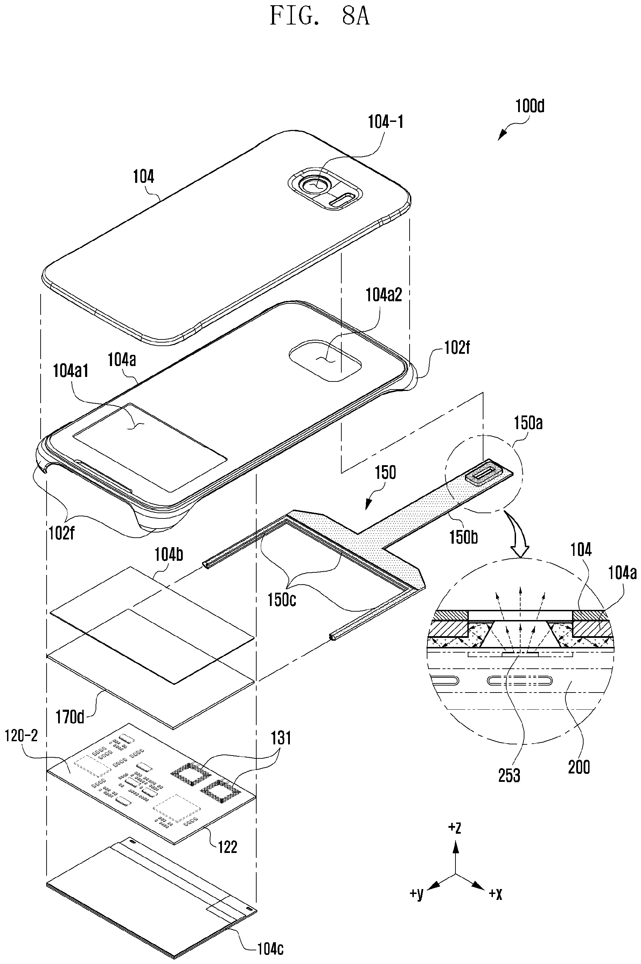

FIG. 8A is a schematic exploded perspective view illustrating an accessory device according to another embodiment of the present invention.

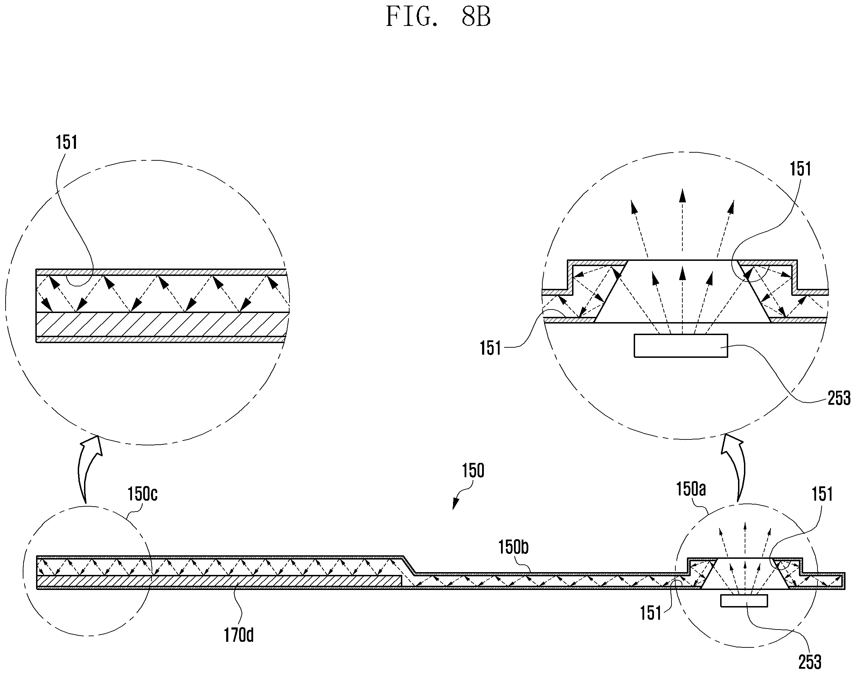

FIG. 8B is a schematic cross-sectional view illustrating an example of an accessory device according to another embodiment of the present invention.

In operation S710 of FIG. 7, an EPD event occurs.

In the portable device 200, an EPD event for EPD driving of the accessory device **100** may occur. Through an application or a widget installed in the portable device 200, an EPD event may occur. The EPD event may include, for example, an SMS receiving event, phone receiving event, or weather event. The controller 210 may transmit a radio signal corresponding to the EPD event to the accessory device 100 using the near field communication unit 232.

Before transmitting a radio signal corresponding to the EPD event to the accessory device 100, the controller 210 of the portable device 200 may search for a local communication signal of the accessory device 100 through the near field communication unit 232.

In operation S720 of FIG. 7, power is wirelessly supplied to the accessory device.

The portable device 200 may transmit wireless power to the antenna unit 131 received in the accessory device 100 found through an antenna unit (not shown) of the near field communication unit 232.

The received wireless power may be supplied to the processor 110 via the AC-DC converter 135 and the regulator 136. The processor 110 may be activated by the provided power. Further, the received wireless power is alternating current and may be supplied to the EPD controller 175 via the AC-DC converter 135 and the regulator 136. Further, power may be supplied to the EPD unit 170 through the EPD controller 175 or power may be supplied in the regulator 136.

The processor 110 may be wirelessly connected by the supplied power to the near field communication unit 232 of the portable device 200 through the near field communication controller 130. Further, the processor 110 may be wirelessly connected to the near field communication unit 232 of the portable device 200 using the near field communication controller 130 and the antenna unit 131.

The activated processor 110 may perform authentication (e.g., REQS signal, ATRS signal) of the portable device 200 through the near field communication controller 130 and the antenna unit 131. Further, the processor 110 may perform authentication (e.g., REQS signal, ATRS signal) of the portable device 200 through a separate crypto processor, the near field communication controller 130, and the antenna unit 131.

In operation S730 of FIG. 7, illuminance is detected.

When wireless power is supplied to the accessory device 100, the controller 210 of the portable device 200 may detect illuminance of a periphery using the illuminance sensor 272. The controller 210 of the portable device 200 may control the illuminance sensor 272 to detect illuminance of a periphery. The illuminance sensor 272 may output an illuminance signal (e.g., an analog illuminance sensor may output an analog signal or a digital illuminance sensor signal may output a digital signal) to the controller to correspond to the detected illuminance. The controller 210 may calculate illuminance using a received luminance signal. The controller 210 may store calculated illumination as detection illumination information at the storage unit 275. For example, the calculated illumination may have a value of 0 to 700 lux.

Intensity of illumination of artificial lighting (e.g., studio lighting) may be 1000 lux, intensity of illumination of outdoors in daylight may be 10,000 to 25,000 lux, and intensity of illumination of direct sunlight at outdoors may be 32,000 to 130,000 lux. Intensity of illumination of sunrise or sunset may be 400 lux, and intensity of illumination of a full moon near the equator may be 1 lux. In operation S730 of FIG. 7, the calculated intensity of illumination may be 100 lux.

FIG. 8A is a schematic exploded perspective view illustrating an accessory device according to another embodiment of the present invention.

FIG. 8B is a schematic cross-sectional view illustrating an example of an accessory device according to another embodiment of the present invention.

In operation S740 of FIG. 7, a flash operates.

The controller 210 of the portable device 200 may compare the calculated intensity of illumination with preset intensity of illumination (e.g., 200 lux). When the calculated intensity of illumination is lower than the preset intensity of illumination, the controller 210 of the portable device 200 may operate the flash 253. The controller 210 of the portable device 200 may control to supply power to the flash 253 through the power supply 280.

With reference to FIGS. 8A and 8B, an accessory device 100d may include a light guide 150. The accessory device 100d of FIGS. 8A and 8B is similar to (e.g., the difference of the light guide 150) or the same as the accessory device 100a of FIGS. 4A and 4B and therefore a detailed description thereof is omitted.

According to an embodiment, the light guide 150 may be located under a second housing 104a (e.g., z-axis direction). The light guide 150 may guide a portion of light emitted from the flash 253 to the outside to the EPD unit 170d. A portion of the light guided through the light guide 150 may be provided as a light source for the EPD unit 170d. A portion of the light reflected and input through a light guide input area 150a may be output from a light output area 150c to the EPD unit 170d via a light transmission area 150b.

The inside of the light guide 150 may be coated (e.g., several *µ*m to several hundreds *µ*m) with a reflective material (e.g., silver, chromium) 151 that reflects well light or a film 151, which is a reflective material, may be attached (or adhered) to the inside of the light guide 150.

A shape of a cross-section of the inside to which a film of a reflective material is adhered (or bonded) or coated with a reflective material in the light guide 150 may include a circle, oval, square, or polygon.

A maximum thickness of the light guide 150 may be smaller than that of the first housing 104. A maximum thickness of the light guide 150 may be smaller than that of the second housing 104a. Further, a maximum thickness of the light guide 150 may be larger than that of one of the first housing 104 and the second housing 104a. A thickness of the accessory device 100d of FIG. 8A including the light guide 150 may be larger than that of the accessory device 100a of FIG. 4A.

The light guide 150 may be implemented in the accessory devices 100, 100a, 100b, and 100c as well as the accessory device 100d. For example, a thickness of the accessory devices 100, 100a, 100b, and 100c including the light guide 150 may be larger than that of the accessory device 100d that does not include the light guide 150.

A shape of the light guide 150 may be changed according to at least one of a size of the EPD unit 170 and a distance between the light guide input area 150a and the light guide output area 150c. A shape of the light guide 150 may be changed according to at least one of a size of the EPD unit 170 and a position of the flash 253.

In operation S750 of FIG. 7, data are displayed in the EPD unit.

When the flash 253 operates, the controller 210 of the portable device 200 may transmit data to the accessory device 100 through the near field communication unit 232. Data received from the portable device 200 may be data corresponding to an EPD event (e.g., the calling phone number, and a text corresponding to an incoming call).

The processor 110 of the accessory device 100 may control to process data received from the portable device 200 and to display the data in the EPD unit 170.

The accessory device 100 may receive a content as well as a radio signal (or data) and power. The content may include video files, audio files, text files, image files, or web pages displayed or output from the EPD unit 170.

When data are displayed in the EPD unit 170, a display control method of the accessory device 100 is terminated.

An accessory device according to an embodiment of the present invention includes a first housing; a second housing having a first opening and coupled to the first housing; a display unit configured to display a content through the first opening and having an upper end electrode and a lower end electrode; a printed circuit board (PCB) configured to mount electronic components including a processor; and an antenna unit electrically connected to the PCB and configured to receive data and power from a portable device received by a mounting structure, wherein the lower end electrode and a first surface of the PCB come in contact with each other and supply an operating voltage for driving the display unit through the first surface of the PCB.

According to an aspect of the present invention, some of the electronic components may be mounted in the second surface of the PCB.

According to an aspect of the present invention, the processor may be mounted in the PCB to be opposite to the rear surface of the portable device received in the mounting structure.

According to an aspect of the present invention, the accessory device may further include a third housing located under the second housing and configured to cover the second surface in the PCB.

According to an aspect of the present invention, an electronic component may include a communication unit configured to connect a portable device received in the accessory device and the accessory device by near field communication; an antenna unit connected to the communication unit and configured to wirelessly receive power from the portable device; an alternating current (AC) to direct current (DC) converter configured to convert an alternating current applied from the antenna unit to a direct current; a regulator configured to convert the direct current to a driving operation voltage of the electronic component; and a display controller connected to the regulator and configured to control the display unit.

According to an aspect of the present invention, an area of the first opening may be smaller than a surface area of the first housing.

According to an aspect of the present invention, the accessory device may further include a second opening spaced apart from the first opening in the second housing and formed at a position corresponding to a rear camera of the portable device.

According to an aspect of the present invention, the accessory device may include a bumper type cover configured to protect at least one of a side surface and a rear surface of the portable device.

An accessory device according to an embodiment of the present invention includes a front cover, a rear cover configured to receive a portable device, and a connecting portion configured to connect the front cover and the rear cover, wherein the front cover includes a first housing positioned at an outer surface of the front cover; a display unit positioned under the first housing and configured to display a content and having an upper end electrode and a lower end electrode; a first printed circuit board (PCB) configured to mount some of electronic components; and a second housing configured to protect the first PCB, and wherein the rear cover includes a third housing positioned at an internal surface of the rear cover and having a mounting structure configured to receive the portable device; a second PCB connected to the antenna unit and configured to mount some of the electronic components; and a fourth housing configured to protect the second PCB.

According to an aspect of the present invention, the accessory device may further include a flexible PCB configured to electrically connect the second PCB and the first PCB, wherein the flexible PCB may be partially located at the connecting portion and connect the second PCB and the first PCB.

According to an aspect of the present invention, an operating voltage for driving the display unit may be supplied from the second PCB to the first PCB through the flexible PCB.

According to an aspect of the present invention, the first housing may include a first opening corresponding to a speaker exposed at the front surface of the portable device.

According to an aspect of the present invention, in the accessory device, the lower end electrode and the first surface of the first PCB may come in contact with each other, and an operating voltage for driving the display unit may be supplied through the first surface of the first PCB.

According to an aspect of the present invention, an area of the first PCB may be smaller than that of the display unit.

According to an aspect of the present invention, in the accessory device, an electrophoretic display controller configured to control the display unit may be mounted in the first PCB.

According to an aspect of the present invention, the third housing further may have a second opening corresponding to a rear camera of the portable device and a third opening spaced apart from the second opening and corresponding to the second PCB.

According to an aspect of the present invention, in the accessory device, at least one of a processor and a near field communication controller configured to control the accessory device may be mounted in the second PCB.

An accessory device according to another embodiment of the present invention includes a housing including a first surface facing in a first direction and a second surface facing in a second direction opposite to the first direction; a connection structure configured to detachably attach the housing to an external device including a front surface and a rear surface and that enables the second surface to face the rear surface of the external device; a near field wireless communication circuit disposed within the housing and formed to wirelessly receive power and at least one signal through the rear surface of the external device; a control circuit disposed within the housing and electrically connected to the communication circuit; and at least one display element including a container, a liquid within the container, and a plurality of particles dispersed within the liquid as at least one display element exposed at the first surface of the housing, wherein the control circuit is configured to move at least a portion of the plurality of particles in order to display at least one of a character and an image on the first surface in response to at least one signal from the external device.

According to an aspect of the present invention, the apparatus may further include an at least partially transparent layer configured to form at least a portion of the first surface.

According to an aspect of the present invention, the at least partially transparent layer may further include an image or character printed thereon or inserted therein.

According to an aspect of the present invention, the plurality of particles may have the same color.

Methods according to an embodiment of the present invention may be implemented into a program command form that may be performed through various computer means to be recorded in a computer readable medium. The computer readable medium may include a program command, a data file, and a data structure in single or in combination form. For example, the computer readable medium may be stored at a volatile or nonvolatile storage device such as a storage device of an ROM regardless of whether it may be deleted or re-recorded; a memory such as an RAM, memory chip, device, or integrated circuit; or a storage medium that may be optically or magnetically recorded such as a compact disc (CD), digital versatile disk (DVD), magnetic disk, or magnetic tape and that may be read simultaneously with a machine (e.g., a computer).

A memory that may be included within a portable device is an example of a storage medium that may be read with a program including instructions that implement embodiments of the present invention or a machine appropriate for storage of programs. The program instruction recorded at the medium may be specially designed and configured for the present invention or may be known to and used by a person of ordinary skill in computer software.

Although embodiments of the present invention have been described in detail hereinabove, it should be clearly understood that many variations and modifications of the basic inventive concepts herein described that may appear to those skilled in the art will still fall within the spirit and scope of the embodiments of the present invention as defined in the appended claims.

Therefore, the scope of the present invention is not limited to the described embodiments, and it should be determined by the appended claims and their equivalents.

## Claims

1. An accessory device, comprising:
a first housing;
a second housing having a first opening and coupled to the first housing;
a display unit configured to display a content through the first opening and having an upper end electrode and a lower end electrode;
a printed circuit board (PCB) configured to mount electronic components comprising a processor; and
an antenna unit electrically connected to the PCB and configured to receive data and power from a portable device received by a mounting structure,
wherein the lower end electrode and a first surface of the PCB come in contact with each other and supply an operating voltage for driving the display unit through the first surface of the PCB.

2. The accessory device of claim 1, further comprising a third housing located under the second housing and configured to cover a second surface of the PCB.

3. The accessory device of claim 1, wherein the electronic components comprise:
a communication unit configured to connect the accessory device and the portable device received in the accessory device by near field communication;
an antenna unit connected to the communication unit and configured to receive power wirelessly from the portable device;
an alternating current (AC) to direct current (DC) converter configured to convert an alternating current applied from the antenna unit to a direct current;
a regulator configured to convert the direct current to a driving operation voltage of the electronic components; and
a display controller connected to the regulator and configured to control the display unit.

4. The accessory device of claim 1, wherein the second housing further comprises a second opening spaced apart from the first opening and formed at a position corresponding to a rear camera of the portable device.

5. The accessory device of claim 1, wherein the accessory device comprises a bumper type cover configured to protect at least one of a side surface and a rear surface of the portable device.

6. An accessory device comprising a front cover, a rear cover configured to receive a portable device, and a connecting portion configured to connect the front cover and the rear cover,
wherein the front cover comprises:
a first housing positioned at an outer surface of the front cover;
a display unit positioned under the first housing and configured to display a content and having an upper end electrode and a lower end electrode;
a first printed circuit board (PCB) configured to mount some electronic components; and
a second housing configured to protect the first PCB, and
wherein the rear cover comprises:
a third housing positioned at an internal surface of the rear cover and having a mounting structure configured to receive the portable device;
a second PCB connected to an antenna unit and configured to mount some of the electronic components; and
a fourth housing configured to protect the second PCB.

7. The accessory device of claim 6, further comprising a flexible PCB configured to electrically connect the second PCB and the first PCB,
wherein the flexible PCB is partially located at the connecting portion and is configured to connect the second PCB and the first PCB.

8. The accessory device of claim 7, wherein an operating voltage for driving the display unit is supplied from the second PCB to the first PCB through the flexible PCB.

9. The accessory device of claim 6, wherein the lower end electrode and the first surface of the first PCB come in contact with each other, and an operating voltage for driving the display unit is supplied through the first surface of the first PCB.

10. The accessory device of claim 6, wherein an electrophoretic display controller configured to control the display unit is mounted in the first PCB.

11. The accessory device of claim 6, wherein the third housing further has a second opening corresponding to a rear camera of the portable device and a third opening spaced apart from the second opening and corresponding to the second PCB.

12. The accessory device of claim 6, wherein at least one of a processor and a near field communication controller configured to control the accessory device is mounted in the second PCB.

13. An accessory device, comprising:
a housing comprising a first surface facing in a first direction and a second surface facing in a second direction opposite to the first direction;
a connection structure configured to detachably attach the housing to an external device comprising a front surface and a rear surface and that enables the second surface to face the rear surface of the external device;
a near field wireless communication circuit disposed within the housing and formed to wirelessly receive power and at least one signal through the rear surface of the external device;
a control circuit disposed within the housing and electrically connected to the communication circuit; and
at least one display element comprising a container, a liquid within the container, and a plurality of particles dispersed within the liquid as at least one display element exposed at the first surface of the housing,
wherein the control circuit is configured to move at least a portion of the plurality of particles in order to display at least one of a character and an image on the first surface in response to at least one signal from the external device.

14. The accessory device of claim 13, further comprising an at least partially transparent layer configured to form at least a portion of the first surface.

15. The accessory device of claim 14, wherein the at least partially transparent layer further comprises an image or character printed thereon or inserted therein.
